# EUROPEAN PATENT SPECIFICATION

(11) **EP 4 645 799 B1**
(45) Date of publication and mention of the grant of the patent: **15.07.2026**
(21) Application number: 24306420.1
(22) Date of filing: 30.08.2024
(51) Int. Cl.: H04L 41/0853, H04L 41/0866, G06F 8/61, G06F 9/4401, G06F 21/53, G06F 21/57, G06F 21/62, G06F 21/78, H04L 41/0813, H04L 41/084, H04L 41/5054, H04L 67/00, H04L 41/0859, H04L 41/04, H04L 41/0806, H04L 43/0817, H04L 41/40, H04L 41/12, H04L 41/0894, H04L 67/1095, H04L 12/46

(54) **METHOD AND SYSTEM FOR AUTOMATED DEPLOYMENT OF A COMPUTING INFRASTRUCTURE**
VERFAHREN UND SYSTEM ZUM AUTOMATISIERTEN EINSATZ EINER DATENVERARBEITUNGSINFRASTRUKTUR
PROCÉDÉ ET SYSTÈME DE DÉPLOIEMENT AUTOMATISÉ D'UNE INFRASTRUCTURE INFORMATIQUE

(30) Priority: 30.04.2024 EP 24305690
(43) Date of publication of application: 05.11.2025
(73) Proprietor: OVH, 59100 Roubaix (FR)
(72) Inventor: DEGAT, Yann, 59100 Roubaix (FR); COUTELLIER, Victor, 59100 Roubaix (FR)
(74) Representative: BCF Global

(56) References cited:
- CN-A- 117 170 916
- US-A1- 2011 016 368
- US-A1- 2019 236 061
- US-B2- 10 257 289

## Description

### Introduction

The present technology relates to the technical field of data centre management and automation; more particularly, it relates to methodology for deploying and managing large-scale data centres.

### Background

Data centres have become essential for businesses and organisations to store, process, and manage large digital information repositories. Traditional methods of deploying and managing data centres involve manually configuring network equipment and server settings, which can result in errors, inconsistencies, and extended downtime. For example, Cisco offers a proprietary solution called Cisco Application Policy Infrastructure Controller (APIC), designed to manage network infrastructure without the need for manual provisioning of new devices. However, this system requires three controllers for deployment, making it unsuitable for initial deployments with limited resources. Additionally, this solution does not support LLDP discovery for BareMetal servers and lacks some features in comparison to other traditional manual solutions.

OpenStack Ironic is another open-source software that provides primitives for managing BareMetal servers and a complete lifecycle. However, it requires a pre-existing infrastructure (servers, network) before deployment, making it less suitable for initial deployments. Other open-source software also lacks the ability to deploy and integrate the network infrastructure during the initial setup. Microsoft Azure Stack is a software solution that needs to be deployed by a third party over a manually provisioned infrastructure (including servers, storage, and network). Google's on-premises solution follows the same approach. Broadcom/VMware offers a hypervisor with modules but does not include infrastructure management capabilities.

By way of example, US Pat. No. 10,257,289 discloses a method and associated systems for capturing configuration items from hybrid-cloud provisioning data. A processor of a service-management system intercepts a service request requesting that the hybrid cloud's orchestration mechanism provision or deprovision a configuration item of the hybrid cloud. The service-management system identifies the configuration item by examining the service request and then forwards the request to the cloud-orchestration mechanism. After confirming that the request has been satisfied, the service-management system retrieves from the orchestration mechanism provisioning information that describes attributes of the newly provisioned or deprovisioned configuration item and uses this information to update a configuration- management database, marking any provisioning information newly stored in the database as being authorized for use by other management systems of the hybrid cloud. The service-management system then enhances the stored data by means of an artificially intelligent analytics module and additional configuration-item data collected by a discovery agent.

US Pub. No. 2011/0016368 discloses a method for auditing and verifying configuration items (CIs) in an information technology (IT) configuration management database (CMDB) includes identifying which configuration item (CI) types should be part of an audit, defining link rules to link an authorized CI type stored in a CMDB to an actual CI type that is part of an IT infrastructure, retrieving all authorized CI instances of the identified CI types from the CMDB, retrieving all actual CI instances of the identified CI types from a discovery upload of a current IT environment, comparing the actual CI instances to the authorized CI instances, and taking remedial action when variances are discovered.

US Pub. No. 2019/0236061 discloses a verification check is performed for a configuration management database (CMDB) configuration item (CI); the CMDB CI being an information technology asset of a computing environment and being previously discovered as part of a CMDB CI discovery procedure for a CMDB system, and discovered on a hosting component hosting the CMDB CI. The discovery procedure provides configuration data associated with the CMDB CI, and the configuration data is stored as part of CMDB configuration information of the CMDB system. Performance of the verification check of the CMDB CI is tailored to the CMDB CI, and includes using the configuration data provided by the discovery procedure to target at least one inquiry to the hosting component, which may include an inquiry to the CMDB CI thereof. An updated status of the CMDB CI is determined based on performing the verification check.

CN 117170916A *(Translation)* discloses a fault analysis method is provided, including: obtaining status information of a bare metal server during the execution of a target task; determining the target fault type of the bare metal server based on the status information; and determining the target fault type of the bare metal server based on the target task. At least one enabling information corresponding to the fault type is determined, and at least one analysis result corresponding to the at least one enabling information is determined; at least one analysis result is summarized to generate a problem detail report.

However, none of the noted references provide a comprehensive approach to the automated deployment and management of data centres. It is, therefore, an objective of the present technology to overcome at least partially these limitations.

### Summary

The present technology has been designed to overcome at least some drawbacks present in prior art solutions in which the principles of the present technology are represented by the appended set of claims.

### Brief description of the drawings

For a better understanding of the present technology, as well as other aspects and further features thereof, reference is made to the following description which is to be used in conjunction with the accompanying drawings, where:
FIG. 1: Figure 1 illustrates a computing infrastructure with servers and switches according to an embodiment of the present technology.
FIG. 2: Figure 2 illustrates the sequential steps of a computer-implemented method for automated deployment of at least one computing infrastructure, according to an embodiment of the present technology.
FIG. 3: Figure 3 illustrates an automated computing infrastructure deployment system, according to an embodiment of the present technology.
FIG. 4a to 4f: Figures 4a to 4f schematically illustrate steps of a computer-implemented method for automated deployment of at least one computing infrastructure, according to an embodiment of the present technology.
FIG. 5a to 5k: Figures 5a to 5k illustrate steps implemented by at least one server management module related to self-encrypting drives, according to an embodiment of the present technology.
FIG. 6: Figure 6 schematically illustrates a workflow switch configuration, according to an embodiment of the present technology.
FIG. 7a and 7b: Figures 7a and 7b schematically illustrate a multi-instances Network Operations Gateway (NOG) module, according to an embodiment of the present technology.
FIG. 8 schematically illustrates a system for a method of reporting the states of the components of the computing infrastructure of FIG. 1.
FIG. 9 schematically illustrate steps of a computer-implemented method for reporting the states of the components of the computing infrastructure of FIG. 1, according to an embodiment of the present technology.

### Detailed description

The examples and conditional language recited herein are intended to aid the reader in understanding the principles of the present technology in which such are embodied by the appended set of claims.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

It will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present technology.

In the context of the present technology, a server refers to a computer system or a specialised hardware device that provides services and resources over a network to other computers, devices, or users. Servers are typically equipped with robust processing power, large memory capacity, and extensive storage capabilities to handle intensive computational tasks and manage vast amounts of data. They run dedicated software, such as web servers, database servers, file servers, or application servers, to deliver specific functionalities and services to clients upon request. The client devices access these resources through standard communication protocols like HTTP, FTP, or TCP/IP.

In the context of this technology, a switch is a networking device that forwards and filters data packets between devices connected to it. It uses packet switching to receive, process, and forward data to other devices on the network based on their MAC or IP addresses. Switches are essential components in building and managing computer networks, enabling efficient communication between different devices within a data centre infrastructure.

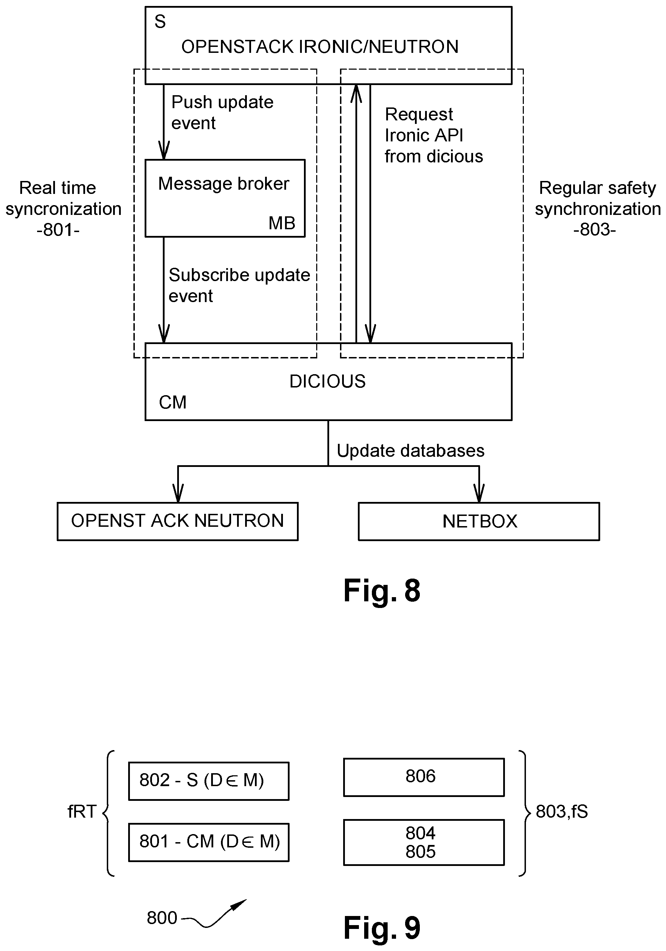

According to an embodiment, the present technology relates to a computer-implemented method for reporting states of the components of a computing infrastructure, as will be detailed in relationship with figures 8 and 9.

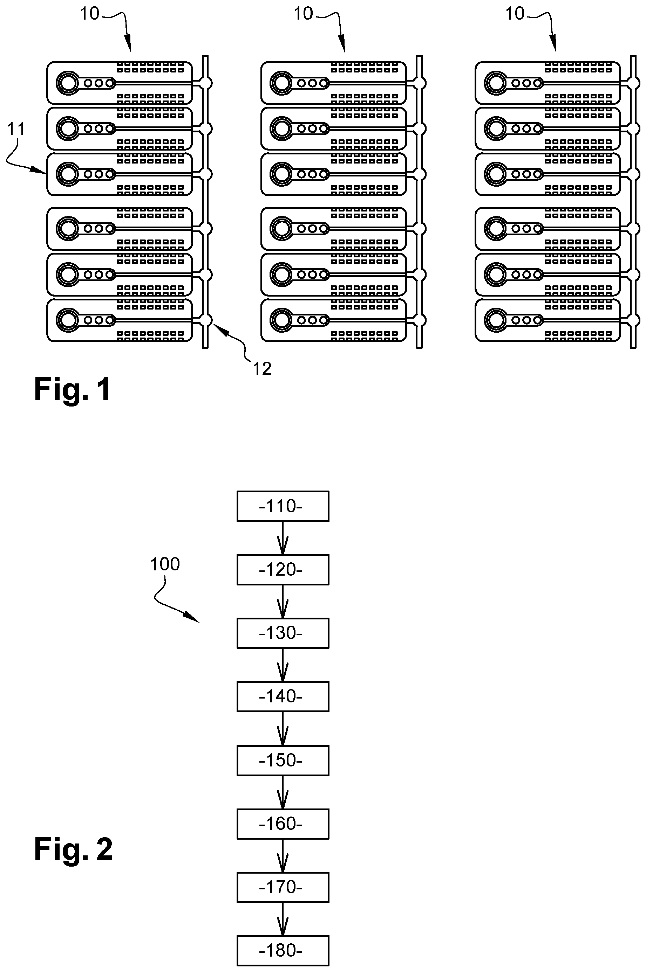

The present technology particularly applies for deploying and managing data centres through autonomous initialisation and configuration processes as will be detailed in relationship with FIG. 1 to 7.

In the following description, the method for reporting the states of the components is referred to as method 800 while the use of method 800 for the automated deployment of a datacentre is referred to as method 100.

The method 100 is now detailed in relationship with FIG. 1 to FIG. 7.

According to an embodiment, the present technology relates to automated deployment and management of infrastructure scalable from a few servers to a data centre of up to 100 racks, for example, without any limitation. The smallest deployment starts with one server for control and one switch. The present technology provides ready-for-provision multi-tenants BareMetal instances, i.e. un-provisioned servers, supporting any operating system with private networking inside each tenant.

According to an embodiment, and as illustrated by Figures 1 and 2, the present technology relates to the computer-implemented method 100 for automated deployment of at least one computing infrastructure 10, also called a data centre. This computing infrastructure 10 comprises several components, being at least one un-provisioned server 11 and at least one switch 12. The method 100 comprises several, preferably interconnected, components configured to work together to deploy and manage the computing infrastructure 10 in an autonomous manner.

As illustrated by Figures 2, 3 and 4a to 4f, according to an embodiment, the computer-implemented method 100 comprises at least the following steps:
- accessing 110 a computer-readable medium, the computer-readable medium comprises preferably instructions which, upon being operated by a processor 300, causes the execution of software components. Advantageously, the software components comprise at least:
   ∘ a Configuration Management DataBase (CMDB) 210, also called Netbox;
   ∘ a deployment module 220, also called OpenStack;
   ∘ a communication module 230, also called Dicious;
   ∘ a configuration module 240, also called Flux;
   ∘ a Network Operations Gateway module 250, also called NOG;
   ∘ a Domain Name System module 260, also called DNS module or DNSMasq;
   ∘ Optionally, a server management module 270, also called Ironic;
   ∘ Optionally, a key management module 280, also called Barbicane;
   ∘ Optionally, a network virtualisation and orchestration module 290, also called Neutron.
- calculating 120 data for initialising the CMDB module 210, the calculated data comprising at least one Internet Protocol (IP) address of the at least one switch 12;
- initialising 130, by the configuration module 240, at least a part of the software components, by:
   ∘ initializing the CMDB module 210 using the calculated data; and
   ∘ configuring the DNS module 260 with configurations from the CMDB module 210;
- determining 140, using the CMDB module 210, configurations for:
   ∘ the communication module 230 on at least one Intelligent Platform Management Interface (IPMI) and on at least one management network; and
   ∘ the switch 12 being configured to allow its provisioning based on the calculated data from the CMDB module 210;
- provisioning 150 at least one network stack, i.e. at least the un-provisioned server 11, with provisioning data from the CMDB module 210, the provisioning data comprising data relating to network devices, interfaces, networks and the configurations determined by the CMDB module 210, the provisioning comprising:
   ∘ provisioning the DNS module 260;
   ∘ provisioning the NOG module 250;
- declaring 160 at least one network in the deployment module 220;
- synchronizing 170 the deployment module 220 with the CMDB module 210 to start a server discovery process by the deployment module 220 using the communication module 230; and
- booting 180 the at least one un-provisioned server 11 to be discovered by the deployment module 220.

According to an embodiment, the CMDB module 210, Netbox for example, is configured to manage and store inventory data relating to the un-provisioned server 11 and switch 12. Netbox 210 is initialized with information about the switches 12 and their configurations using the configuration module 240, Flux for example. This initialisation process involves calculating data for initialising Netbox 210, which comprises at least one IP address of the switch 12.

According to an embodiment, the primary functions of the CMDB module 210 comprise:
- Managing and storing inventory data: the CMDB module 210 maintains comprehensive information about various components of the data centre infrastructure 10, such as servers 11, switches 12, interfaces, VLANs, regions, and configuration templates;
- Pre-generating YAML files: the CMDB module 210 calculates the necessary data to configure network equipment and generates pre-filled YAML files. These YAML files contain the required information to configure the network devices automatically;
- Initializing software components: Upon receiving the pre-filled response file, the CMDB module 210 initialises specific software components like DHCP services on IPMI and management networks, switches, and the Domain Name System (DNS) services;
- Configuration synchronisation: When a change is made to the network configuration in the CMDB module 210, the CMDB module 210 propagates the updated information to all connected controllers through well-defined APIs or communication mechanisms. This ensures that all controllers have up-to-date information about the network infrastructure.

According to an embodiment, the deployment module 220, OpenStack for example, is configured to deploy the computing infrastructure 10. OpenStack 220 communicates with Netbox 210 using the communication module 230, Dicious for example.

According to an embodiment, the primary functions of the deployment module 220 comprise:
- Deployment of computing infrastructure: the deployment module 220 is configured to deploy the computing infrastructure 10, comprising servers 11 and networking components, based on the configuration data provided by other modules like the CMDB module and the configuration module (Flux);
- Virtual network creation: the deployment module 220 comprises at least one component, the network virtualisation and orchestration component 290, configured to create virtual networks necessary for managing server communications and various network interfaces within the computing infrastructure 10;
- DHCP interface management: the deployment module 220 is configured to manage Dynamic Host Configuration Protocol (DHCP) interface modules, like DNS module 260 for example, to assign IP addresses and other relevant configurations to servers during the discovery process.
- Server discovery and enrollment: the deployment module 220 is configured to discover new servers, i.e. un-provisioned servers 11, when they boot up, to enroll them into the processing system 200, and to make them manageable by users.
- Synchronization with Netbox: the deployment module 220 is configured to synchronise its configuration data with the CMDB module 210, to ensure consistency between physical and virtualized network configurations.
- Power management: the deployment module 220 is configured to manage power states of servers to ensure they are ready for deployment or maintenance activities.
- Image deployment: the deployment module 220 is configured to deploy operating system images and other necessary configurations to newly added servers, i.e. un-provisioned servers 11, ensuring consistency and minimizing downtime.
- Provisioning: the deployment module 220 is configured to provision new servers with the appropriate network configurations, allowing them to integrate seamlessly into the existing computing infrastructure 10. This includes configuring virtual interfaces, IP addresses, and routing tables.
- Network reconfiguration: When there is a change in the network configuration in the CMDB module 210, the deployment module 220 automatically reconfigures the virtual networks and other network components as needed to maintain consistency with the physical network.

According to an embodiment, the communication module 230 is configured to manage at least one Dynamic Host Configuration Protocol (DHCP) interface module 260, such as DNSmasq for example. The communication module 230 is configured to allow the communication between Netbox 210 and OpenStack 220, allowing the exchange of necessary configuration data.

According to an embodiment, the configuration module 240 is configured to initialize the CMDB module 210 with information relating to the at least one switch 12 and its configuration.

According to an embodiment, one of the primary functions of the configuration module 240 is to initialise the CMDB module 210 with information relating to the network infrastructure, including switches 12 and their configurations. More specifically, the configuration module 240 can perform the following tasks:
- Initializing the CMDB module 210: The configuration module 240 is configured to initialise the CMDB module 210 by providing it with necessary data such as IP addresses of switches 12, interfaces, VLANs, region names, and configuration templates. This data is calculated based on predefined rules and stored in the configuration module 240.
- Provisioning network devices: The configuration module 240 is configured to provision network devices like switches 12 by pushing their configurations to them after they have been booted up. It does this by utilising rendered configurations obtained from the CMDB module 210 for DHCP services on IPMI and management networks, as well as for switch provisioning.
- Synchronizing with the deployment module 220: The configuration module 240 is configured to synchronise with the deployment module 220 to start the server discovery process. This synchronisation ensures that all network configurations are consistent between the physical infrastructure managed by the CMDB module 210 and the virtual networks managed by the deployment module 220.
- Managing IP addresses: The configuration module 240 is configured to manage IP addresses in the computing infrastructure 10 by pre-calculating all required IP addresses based on a set of rules, such as template, subnet mask and number of hosts per subnet, for example. It then stores and transmits these calculated IP addresses to the appropriate components in the network through the communication device 230.

According to an embodiment, the Network Operations Gateway (NOG) module 250 is configured to pilot the switch 12 by receiving configuration data from the CMDB module 210 and applying the received configurations to the switch 12. This process ensures that the switch 12 is properly configured based on the data stored in the CMDB module 210.

According to an embodiment, the primary functions of the NOG module 250 comprise:
- Receiving configurations from the CMDB module 210: The NOG module 250 is configured to receive configuration data from the CMDB module 210, which comprises information about switches 12, interfaces, VLANs, and other networking components.
- Applying received configurations to network devices: Once the NOG module 250 receives the configurations from the CMDB module 210, it is configured to apply these configurations to the corresponding network devices, ensuring that they are properly configured according to the desired settings.
- Piloting switches: The NOG module 250 is responsible for managing and controlling switches 12 in the computing infrastructure 10. It can pilot switches 12 by receiving configurations from the CMDB module 210 and applying them to the switches 12, allowing for efficient and automated network management.
- Communication with other modules: The NOG module 250 is configured to communicate with other components of the present technology, such as the deployment module 220 and the communication module 230 for example, to ensure seamless integration and coordination between different parts of the computing infrastructure 10.
- Ensuring network security: The NOG module 250 is configured to maintain network security by applying configurations that adhere to security policies and best practices, ensuring that the data centre infrastructure remains protected against potential threats.

According to an embodiment, the Domain Name System (DNS) module 260 is configured to manage the DNS services in the computing infrastructure. The DNS module 260 is provisioned using data from the CMDB module 210, which comprises configurations for the communication module 230 on IPMI and management networks.

According to an embodiment, the Intelligent Platform Management Interface (IPMI) is a standard interface for managing and monitoring computer servers, particularly out-of-band, directly at the hardware level. It enables remote access to various system management features such as power control, temperature monitoring, fan speed control, and BIOS settings. IPMI uses its own dedicated network interface and protocol, allowing administrators to manage servers even when they are not in an active operating system state or when there is a network outage.

According to an embodiment, the server management module 270 comprises at least:
- a control plane component configured to discover and present servers 11, preferably un-provisioned servers, to the deployment module 220 as compute resources, and further configured to integrate encryption;
- a management module (IPA), embedded in an operating system, configured to communicate with the control plane to perform encryption and decryption tasks, manage disks, and establish communication with the control plane.

According to an embodiment, the server management module 270 is configured to manage and integrate un-provisioned servers 11 into the computing environment managed by the deployment module 220. Preferably, its primary functions comprises:
- Discovering and presenting servers 11 to the deployment module 220 as compute resources: its control plane component is responsible for discovering and presenting unprovisioned servers 11 to the deployment module 220, making them available as compute resources.
- Integrating self-encrypting drives (SEDs): the server management module 270 includes a mechanism for managing and integrating Self-Encrypting Drives (SEDs) into the server management process. This ensures that data remains secure by encrypting the drives before they are deployed into the computing infrastructure 10.
- Managing encryption keys: the server management module 270 is configured to manage encryption keys assigned to each host, disk, or client in the computing infrastructure 10 and uses the key management module 280 to manage these keys.
- Secure boot: the server management module 270 supports secure boot for the computing infrastructure 10 components by generating unique signatures for operating system images, storing them in the key management module 280, and validating that only signed operating system images are loaded during server boot.
- Communication with IPA: The management module IPA embedded in an operating system communicates with the control plane to perform encryption and decryption tasks, manage disks, and establish communication with the control plane.

According to an embodiment, the key management module 280 is configured to manage encryption keys for data protection. Its primary functions can comprise:
- Managing encryption keys: the key management module 280 is configured to store and manage encryption keys for various components of the computing infrastructure 10, such as servers 11, disks, and clients. It ensures that only authorized users have access to these keys.
- Securely storing keys: the key management module 280 is configured to use secure storage mechanisms to store encryption keys, ensuring that they are protected against unauthorized access or theft.
- Key rotation: the key management module 280 is configured to support key rotation, which is the process of periodically replacing old encryption keys with new ones to enhance security.
- Integration with other modules: the key management module 280 is configured to integrate with other components of the present technology to manage encryption keys for these modules and ensure secure communication between them.
- Key access control: the key management module 280 is configured to provide fine-grained access control for encryption keys, allowing administrators to grant or deny access based on specific roles or users.
- RESTful API: the key management module 280 is configured to offer a RESTful API that enables easy integration with other components of the present technology and external applications.
- Support for multiple key types: the key management module 280 is configured to support various types of encryption keys, such as RSA, AES, and ECDSA, to cater to different use cases and requirements.
- Key versioning: the key management module 280 is configured to maintain a record of key versions, allowing administrators to roll back to previous versions if needed.

According to an embodiment, the network virtualisation and orchestration module 290 is configured to manage and configure virtual networks within the computing infrastructure 10. Its primary functions can comprise:
- Creating and managing virtual networks: the network virtualisation and orchestration module 290 is configured to enable the creation and management of virtual networks, subnets, routers, firewalls, load balancers, and other related networking components within the deployment module 220.
- Virtual Local Area Network (VLAN) configuration: the network virtualisation and orchestration module 290 is configured to configure VLANs for network interfaces during the server discovery process to ensure proper communication between servers 11 and network devices.
- Dynamic Host Configuration Protocol (DHCP) services: the network virtualisation and orchestration module 290 is configured to manage DHCP services, which assign IP addresses and other relevant configurations to servers 11 during the discovery process.
- Network security: the network virtualisation and orchestration module 290 is configured to provide networking security features such as firewalls, security groups, and access control lists to protect the virtual network infrastructure from unauthorized access or attacks.
- Load balancing: the network virtualisation and orchestration module 290 is configured to offer load balancing capabilities to distribute network traffic across multiple servers for improved performance and availability.
- Network automation: the network virtualisation and orchestration module 290 is configured to automate various networking tasks, such as configuring interfaces, creating subnets, and managing routing tables, to simplify the deployment and management of virtual networks.
- Integration with other modules: the network virtualisation and orchestration module 190 is configured to integrate with other components of the present technology, including the CMDB module 210, and the Network Operations Gateway module (NOG) 250, to ensure seamless communication and coordination between different parts of the computing infrastructure 10.

According to an embodiment, the present technology also comprises calculating 120 data for initializing the CMDB module 210 and configuring at least a part of the software components using the configuration module 240.

According to an embodiment, the present technology also comprises:
- initialising the CMDB module 210 with the calculated data,
- configuring DNS module 260 with configurations from the CMDB module 210,
- determining configurations for the communication module 230, and
- configuring the switch 12 to allow its provisioning based on the calculated data from the CMDB module 210.

According to an embodiment, at least one network stack is provisioned using provisioning data from the CMDB module 210.

Preferably, this provisioning process involves:
- provisioning the DNS module 260, and the Network Operations Gateway (NOG) module 250,
- declaring at least one network in the deployment module 220, and
- synchronizing the deployment module 220 with the CMDB module 210 to start a server discovery process using the communication module 230.

According to an embodiment, the un-provisioned server 11 is booted to be discovered by the deployment module 220. Once the server 11 is discovered, it becomes manageable by at least one user.

According to an embodiment, the discovery process of a new server 11, i.e. a new un-provisioned server, comprises at least three steps: Initialization, Discovery, End of discovery.

Preferably, during the initialisation step of the discovery process, the new server 11 is powered off and unknown to both the deployment module 220 and the Configuration Management Database (CMDB) module 210. Network interfaces on the new server 11 are then configured in a discovery virtual local area network mode (VLAN) by the network virtualization and orchestration component 290. Once the new server 11 is powered on, it boots through the network and loads an agent that analyzes the hardware and generates a report. This report is sent to the deployment module 220, which synchronises the information with the CMDB module 210 using the communication module 230.

Preferably, in the discovery step, the new server's hardware is analyzed by the agent, and its configuration data is reported back to the deployment module 220. The deployment module 220 uses this information to create virtual networks, ports, and other necessary configurations for the new server. Once all configurations are in place, the new server 11 becomes discoverable and manageable by the user.

Preferably, during the end of discovery step, the network interfaces are unconfigured from the Discovery VLAN using the network virtualization and orchestration component 290 and put in an isolation mode, i.e. in quarantine. This is done to ensure security by preventing unauthorised access to the newly discovered server. Advantageously, if a server 11 is deleted from the deployment module 220 database, the corresponding entry in the CMDB module 210 will also be deleted, and the discovery process will be set back for that server 11. This step helps maintain an accurate inventory of servers and their configurations within the data center infrastructure.

Preferably, the discovery process also involves managing IP addresses within the computing infrastructure 10. Pre-calculated IP addresses based on a set of rules such as template, subnet mask and number of hosts per subnet are stored and transmitted to the appropriate components in the network through the communication device 230. Each IP address is related to a template associated with a specific function within the computing infrastructure 10. This dynamic process ensures that all new servers 11 and switches 12 are assigned unique IP addresses, enabling seamless integration into the computing infrastructure 10 network.

The present technology focuses on an innovative method for deploying and managing data centres through autonomous initialisation and configuration processes. The approach encompasses several aspects, which include:
- Initialization of Data Center Networks: This aspect concerns the automatic initialisation of network configurations in a data centre, preferably using pre-generated YAML files that can contain the necessary information to configure network equipment.
- Control Mechanism for Request Instantiation and Real vs. Logical Configuration Comparison (Ironic and Netbox): This qspect revolves around the control mechanism that enables request instantiation in a data centre by comparing real configurations with their logical counterparts using tools like a server management module (Ironic) and the CMDB module (Netbox).
- Execution of Configuration in Parallel (Ironic): This aspect involves the parallel execution of configuration tasks using the server management module (Ironic) when a new server is added to the data center.
- Method of Synchronization of Several Controllers (Netbox, OpenStack): This aspect deals with synchronizing multiple controllers in a data center environment, specifically the CMDB module Netbox and the deployment module OpenStack, to maintain consistency between the physical network configuration and the virtualized network configurations managed by OpenStack.
- Provisioning of Configuration of Equipment in Parallel (Netbox, OpenStack): This fifth technology involves the parallel provisioning of configurations for multiple pieces of equipment in a data center using Netbox and OpenStack to quickly integrate new equipment into the existing infrastructure without causing unnecessary downtime or configuration conflicts.

The present technology also includes an optional aspect for encryption for data protection using Self-Encrypting Drives (SEDs) and at least one server management module (Ironik), the logistic stack used for bare-metal deployment and management, to manage encryption keys and ensure that all new servers are encrypted before being deployed into the data centre.

According to an embodiment, an IP address is assigned as a function of termination for Virtual Extensible LAN (VXLAN) and Border Gateway Protocol (BGP). Preferably, this IP address functions as the intermediary address between two networked devices in a dynamic mode.

According to an embodiment, IP addresses between network devices are pre-calculated and assigned to their respective interfaces within the Configuration Management Database (CMDB) module 210. Once in CMDB module 210, the present technology is configured to allow the retrieving of the interconnections between network devices and thus obtain the necessary information to establish routing protocol BGP connections. Advantageously, to set up a BGP session, it is preferable to know the Autonomous System Number (ASN) of the device on the other end for the BGP peer configuration.

According to an embodiment, pre-calculating IP addresses for network devices and assigning them to their respective interfaces within the CMDB module 210 enables to effectively identify connections between devices and configure BGP sessions, preferably with the required ASN information. Advantageously, this streamlines the process of managing a complex network infrastructure while ensuring accurate and consistent routing configurations.

According to an embodiment, the Intelligent Platform Management Interface (IPMI) is configured for managing servers within a computing infrastructure. Advantageously, this setup enables efficient and centralized control over server operations.

According to an embodiment, the present technology allows for minimal footprint automated infrastructure deployment through the use of compact and efficient hardware components and streamlined software processes. This enables quick and easy implementation in various environments with limited space or resources.

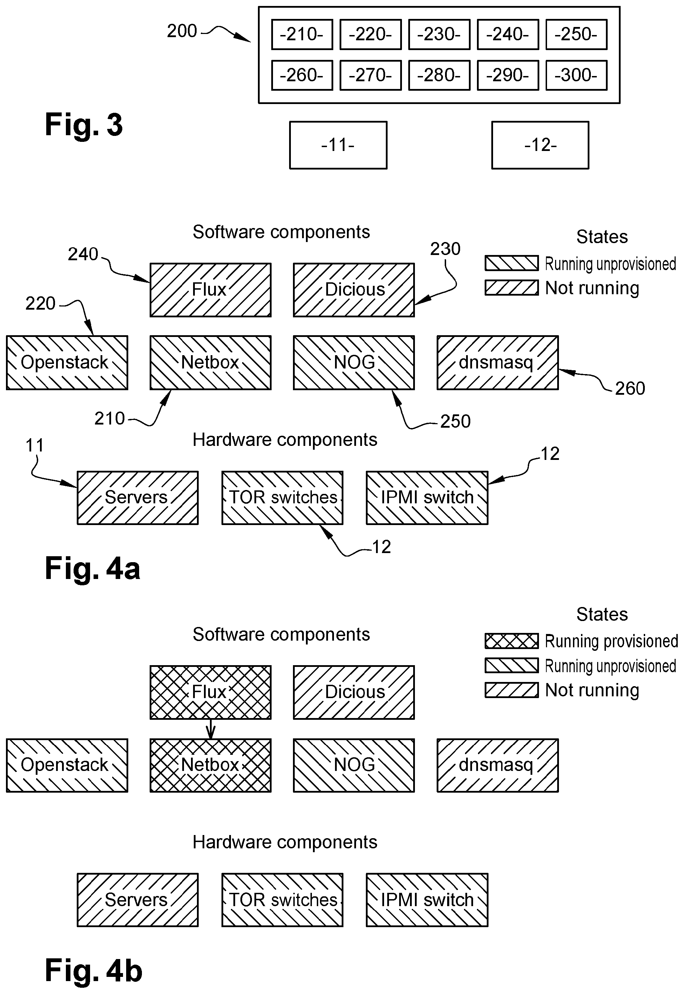

According to an embodiment, Figures 4a to 4f provide an illustrated representation of some steps involved in the computer-implemented method for automated deployment of at least one computing infrastructure according to the present technology.

In figure 4a, the configuration module 240, Flux, is shown sending data to the CMDB module 210, Netbox. This data includes information about the un-provisioned server 11 and switch 12 that are yet to be deployed in the computing infrastructure 10. The communication module 230, Dicious, which manages communication between various software components, facilitates this transfer of data from the configuration module 240 to the CMDB module 210.

In figure 4b, the CMDB module 210 receives the data sent by the configuration module 240 and uses it to configure the Domain Name System (DNS) module 260, DNSMasq. The communication module 240 manages the DHCP interface for the DNS module 260 during this process. This step ensures that the DNS services in the computing infrastructure 10 are properly configured, enabling efficient name resolution and network functionality.

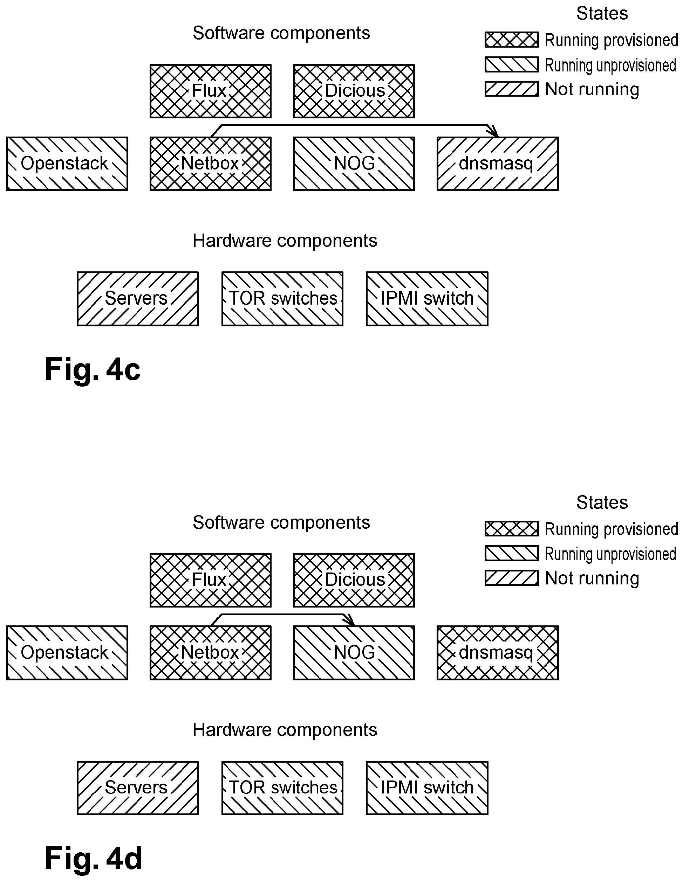

In figure 4c, the CMDB module 210 sends data to the Network Operations Gateway (NOG) module 250. The NOG module 250 is responsible for piloting the switch 12 by receiving configurations from the CMDB module 210 and applying them to the switch 12. This process automates the configuration of switches 12 in the network infrastructure 10, ensuring consistent and accurate configurations across all switches 12.

In figure 4d, the deployment module 220, OpenStack, receives instructions from the CMDB module 210 regarding the inventory data of the un-provisioned server 11 and switch 12. The deployment module 220 provisions the network stack with this information, pushing the configurations onto the switches 12 after boot. This step automates the deployment process, reducing the time and effort required for manual configuration and provisioning.

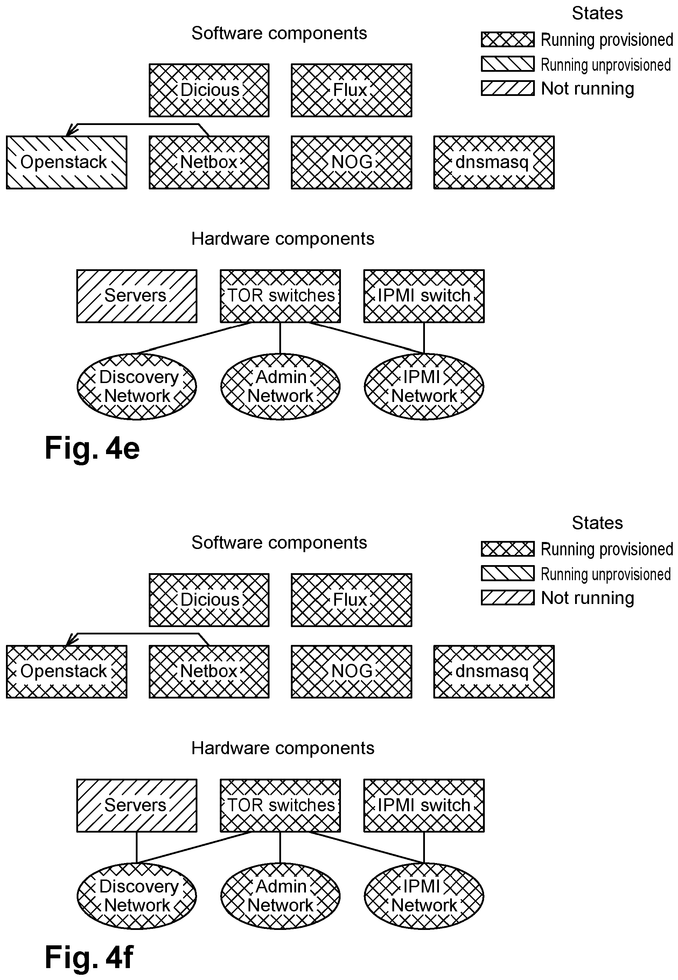

In figure 4e, the servers 11 and switches 12 are shown being provisioned using the data from the CMDB module 210. The deployment module 220 initializes the un-provisioned server 11 by installing an operating system image and other necessary configurations. The network stack is also configured, including virtual interfaces, IP addresses, and routing tables.

In figure 4f, the servers 11 are discovered by the deployment module 220 using a server management module 270, Ironic. This discovery process involves initializing the server 11 with an operating system image and other configurations, registering it with the CMDB module 210, and enriching its inventory data. The communication module 230 manages this process by managing DHCP interfaces and allowing communication between the CMDB module 210 and the deployment module 220. Once the server 11 is discovered, it becomes manageable by users within the computing infrastructure 10.

According to an embodiment, the deployment module is configured to perform certain functions. Preferably, this deployment module 220 is capable of detecting at least one new server, i.e. un-provisioned server 11, using the communication module 230.

Advantageously, upon detection of a new server 11, the deployment module 220 sends the port number and switch 12 number of the new server 11 to the Configuration Management DataBase (CMDB) module 210 via the communication module 230.

Furthermore, according to an embodiment, once the new server 11 has been successfully added to the CMDB module 210, the deployment module 220 removes the discovery mode of the new server 11 using the communication module 230.

According to an embodiment, the present technology is configured to use switches 12 from distinct manufacturers, such as Arista or Cisco, for example. Preferably, the network infrastructure 10 employs a diverse range of components for enhanced reliability and interoperability. Advantageously, incorporating switches 12 from different manufactures allows for flexibility in design and potential cost savings.

The use of switches 12 from distinct manufacturers may provide several technical advantages:
- Interoperability: Switches 12 from various manufacturers may have unique features or capabilities that can enhance the overall network performance when used together.
- Redundancy: Having switches 12 from multiple sources ensures a more robust and resilient infrastructure, as components from different vendors are less likely to fail simultaneously.
- Cost savings: By utilizing switches 12 from various manufacturers, organizations may be able to negotiate better pricing or find cost-effective alternatives for specific network requirements.

According to an embodiment, the deployment module 220 comprises the network virtualization and orchestration component 290, Neutron. This component enables creation and management of virtual networks, subnets, routers, firewalls, load balancers, and other networking components within the deployment module 220.

According to an embodiment, the present technology comprises a step of managing server deletion in the computing infrastructure 10. Preferably, the step of managing server deletion comprises the following sub-steps
- Deleting a server 11 from the deployment module 220;
- Deleting the corresponding entry of the server in the Configuration Management Database (CMDB) module 210;
- Setting back the discovery process in the CMDB module 210.

According to an embodiment, deleting a server from the deployment module 220 results in the automatic deletion of the corresponding entry in the CMDB module 210. Advantageously, this feature ensures that the configuration management database remains up-to-date with the current state of the computing infrastructure 10. According to another embodiment, the method may include additional steps such as verifying the identity of the user requesting the server deletion or confirming that all dependent resources are removed before initiating the deletion process. Advantageously, these features enhance the security and reliability of the computing infrastructure by ensuring proper handling of dependencies and preventing unintended consequences during server deletions.

According to an embodiment, the present technology comprises a step for securing computing infrastructure 10 components. Preferably, the method comprises ensuring secure boot and/or disk encryption. Advantageously, the present technology can comprise a step of deploying software images. According to an embodiment, secure boot is implemented during the deployment process to ensure that only authorised software is loaded onto the servers. This prevents unauthorised code from running and helps protect against malware attacks. According to an embodiment, disk encryption can also be applied to safeguard data stored on servers 11.

According to an embodiment, the present technology comprises discovering at least one bare-metal server, i.e. un-provisioned server 11, using the server management module 270, such as Ironic. This step allows identifying servers 11 that do not have an operating system installed and are directly accessible at the hardware level. Advantageously, the discovered bare-metal server 11 is presented to the deployment module 220 as a compute resource. The presentation occurs through the server management module 270. This integration enables automated deployment of software on the bare-metal server 11. Preferably, self-encrypting drives (SEDs) are integrated into the server management module 270. These drives provide hardware-level encryption for data stored on them. The present technology is configured to assign unique encryption keys to each host and/or disk and/or client of the computing infrastructure resources. Advantageously, a key management module 280, such as Barbican, manages the assigned unique encryption keys. This ensures secure storage and access to the encryption keys. The encryption is transparent to the operating system, allowing for seamless integration within the computing infrastructure 10.

According to an embodiment, the server management module 270 comprises a control plane component. This component is configured to discover and present servers 11 to the deployment module 220 as compute resources. Preferably, it is further configured to integrate encryption. Additionally, according to an embodiment, the server management module 270 comprises a management module (IPA), which is embedded in an operating system. This management module IPA communicates with the control plane component to perform encryption and decryption tasks, manage disks, and establish communication with the control plane.

According to an embodiment, the present technology comprises a step of securely booting operating systems in the computing infrastructure 10. The present technology can comprises the following sub-steps:
- Generating unique signatures for operating system images;
- Storing the unique signatures in a key management module 280, such as Barbican;
- Validating that only signed operating system images are loaded during the booting of at least one server 11;
- Executing an integrated mechanism into the server management module 270, like Ironic, to perform the validation.

Advantageously, the operating system images are signed by a trusted platform or a trusted provider before being stored and validated. This ensures the authenticity and integrity of the operating system images during the booting process.

According to an embodiment, the key management module 280 is configured to securely store the unique signatures using cryptographic techniques to maintain their confidentiality and prevent unauthorised access. Preferably, the validation step can comprise comparing the stored signatures with the ones generated by the operating system images during the booting process. If a match is found, the server 11 deploys the operating system image; otherwise, it halts the boot process to prevent potential security threats.

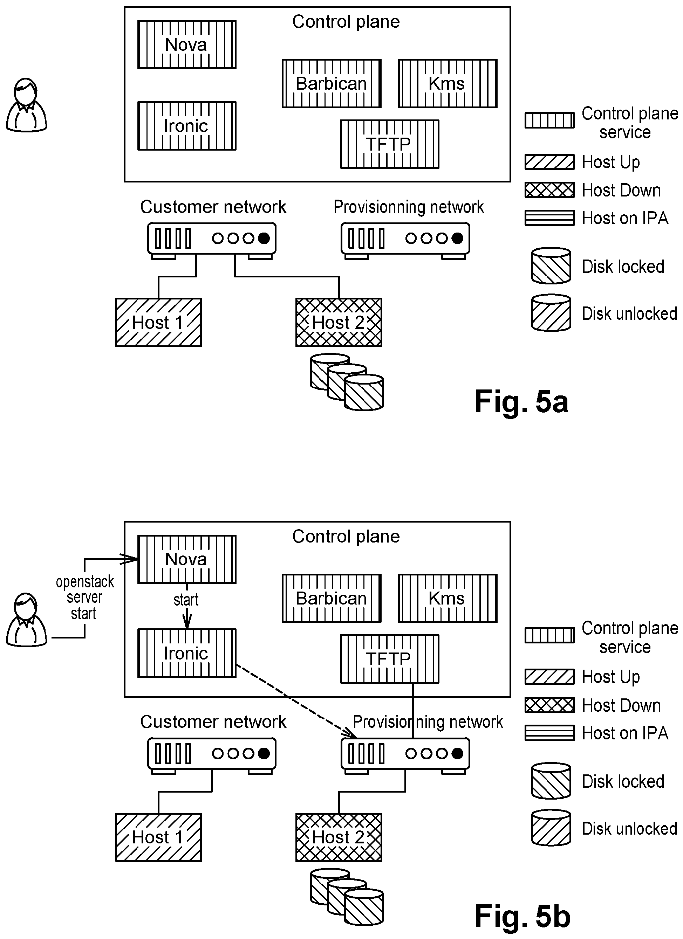

According to an embodiment, the figures 5a to 5k illustrate the steps involved in transitioning from an unprovisioned server 11 to a provisioned one and the recycling process for decommissioning servers 11 using the server management module 270 in the context of deploying and managing at least one computing infrastructure 10. The figures demonstrate various stages, including connecting the server 11 to the provisioning network, booting on IPMI, unlocking disks, switching back to user mode, deleting the server 11, and encrypting SEDs during the recycling process.

In Figure 5a, the initial state of a computing infrastructure is depicted with several software components, such as NOVA, IRONIC, Barbican, KMS, and TFTP. A customer network is connected to two hosts, some disks are locked, and a provisioning network is present. Preferably, NOVA is related to an orchestrator module configured to orchestrate compute resources. Preferably, KMS is a key management system that can be connected or included into the key management module 280, called Barbican. Preferably, TFTP is a file transfer module configured to manage the transfer of files.

In Figure 5b, Nova sends a request to Ironic to start the baremetal node by connecting it to the provisioning network. Ironic reconfigures the host interface to switch it to the provisioning network.

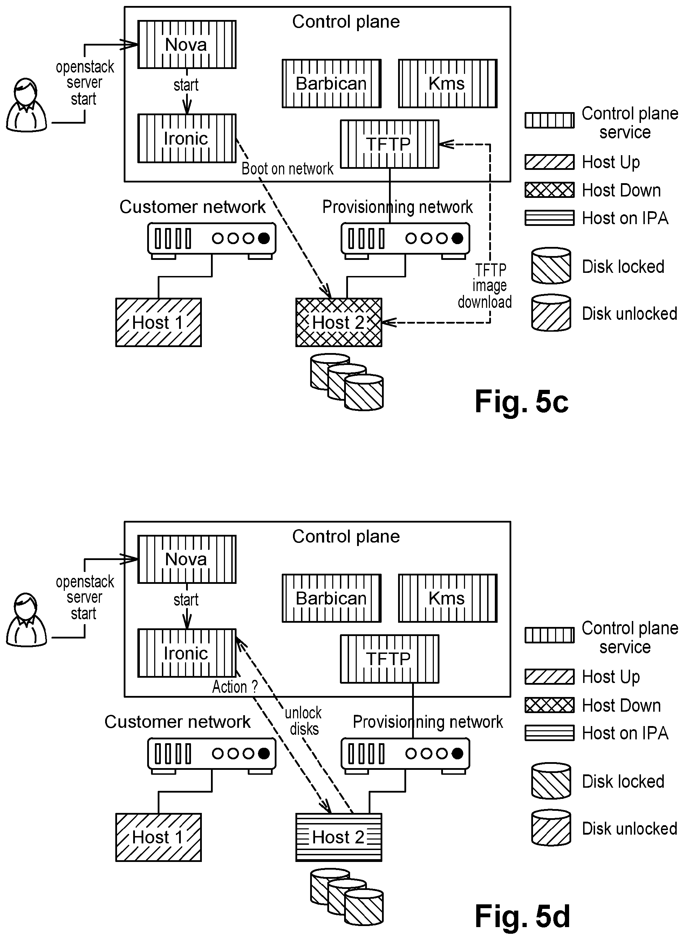

Figure 5c illustrates the boot process of the server on IP Address Management Interface (IPMI) over the network using PXE boot or iPXE. The host downloads the image from the TFTP server during this boot process.

In figure 5d, the Ironic Python Agent image is executed on the host. It asks the control plane for instructions and receives a command to load the "Unlock Disk" feature.

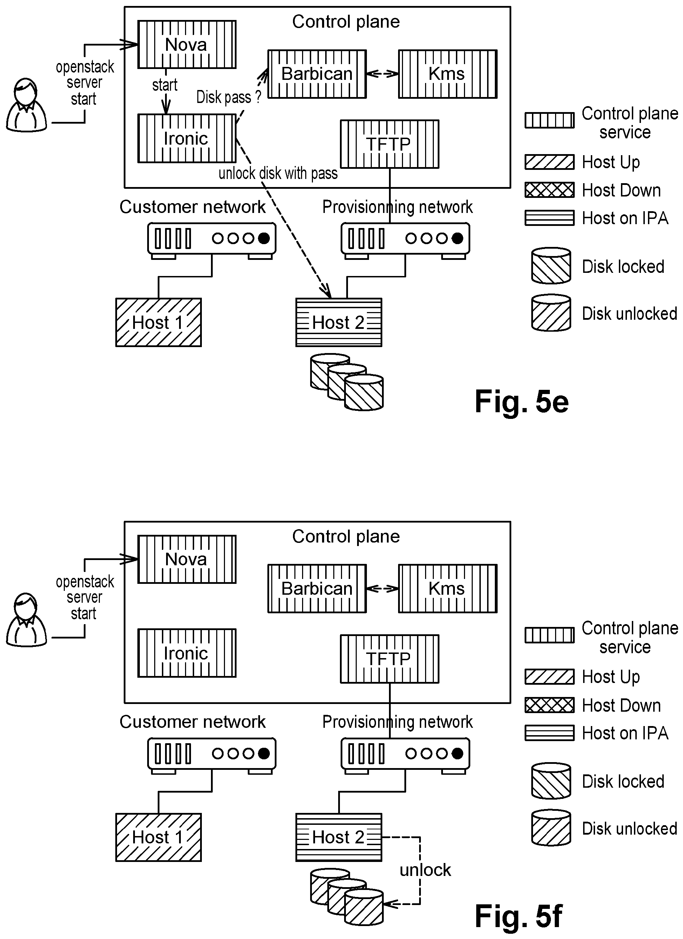

Figure 5e shows IPA using the instructions from Ironic to unlock all disks using a given key obtained from Barbican and stored in KMS.

In figure 5f, IPA is configured to unlock all disks with the provided key, preferably using OPAL-API.

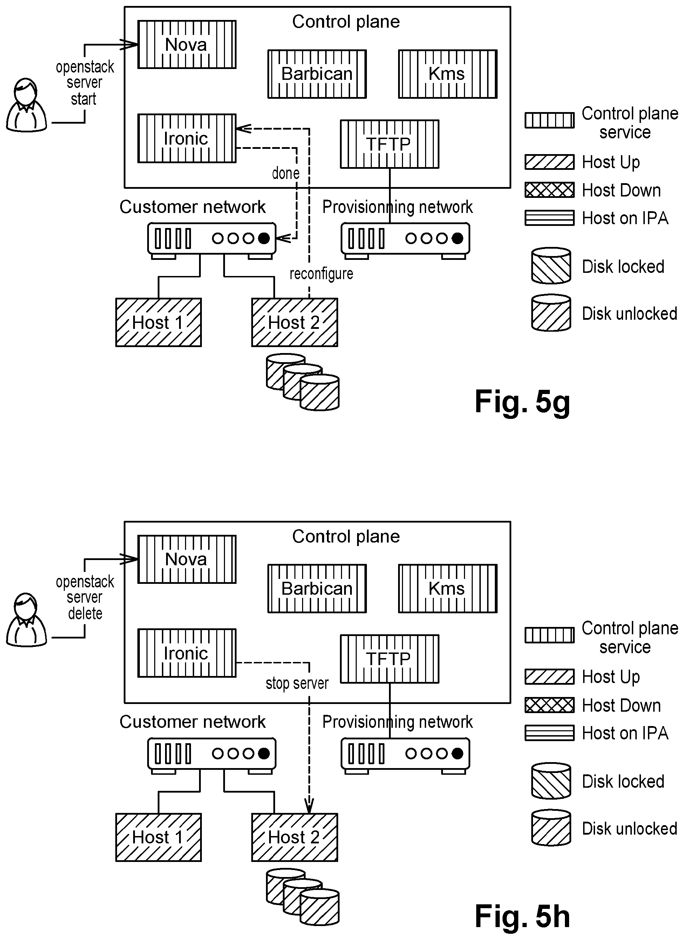

Figure 5g represents the "switch back to user" step where IPA informs Ironic that the job has been completed successfully, and a soft reboot is initiated. Ironic removes the network configuration and puts the host back on the customer network.

Figures 5h through 5k demonstrate the recycling server process. In figure 5h, a customer sends a delete command to Nova, which then sends the delete request to Ironic. Ironic sends a stop command to the server.

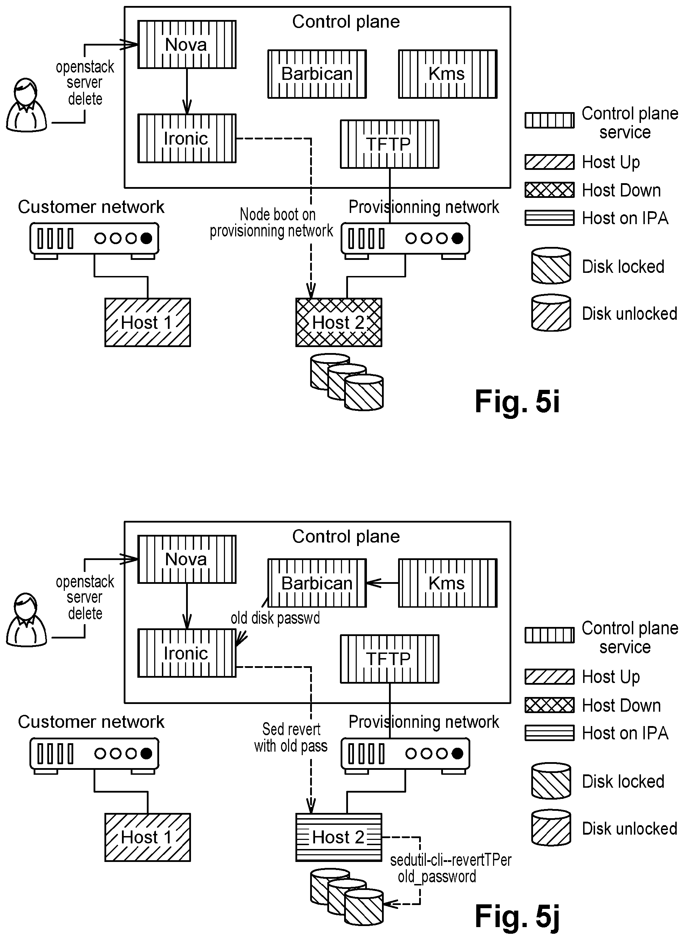

In figure 5i, the boot process is initiated again on IPMI for the recycling process. When the server is off, Ironic reconfigures the network to put it on the provisioning network.

Figure 5j represents the "SEDs revert to factory" step where SEDs are reset to their factory settings.

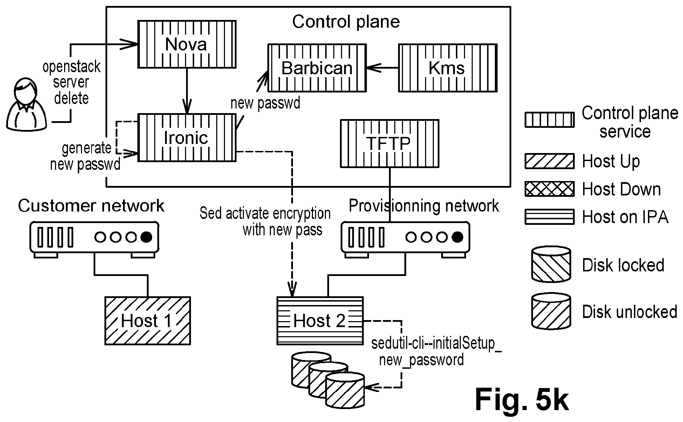

In figure 5k, the "SEDs re-encrypt" step is shown, where SEDs are encrypted using a new encryption key.

In the context of Figures 5a to 5k, the initial state (Figure 5a) sets up the environment with various modules and networks. The "connect server to provisioning network" step (Figures 5b and 5c) initiates the process by requesting Ironic to start the bare-metal node and reconfiguring the host interface to switch it to the provisioning network. The host then boots over the network and downloads the image from the TFTP server.

The "execute Ironic Python Agent image" step (Figures 5d to 5f) instructs IPA on how to unlock all disks using a given key, which is retrieved from Barbican and passed to IPA. IPA then uses "sedutil-cli" to unlock the disks. The "switch back to user" step (Figure 5g) informs Ironic that the job has been completed successfully and initiates a soft reboot, removing the network configuration and putting the host back on the customer network.

The "recycling server" process (Figures 5h to 5k) involves deleting the OpenStack server, booting it on IPA, reverting the SEDs to their factory settings, encrypting them with the latest encryption keys, and continuing with the cleaning process. This process ensures efficient management of resources in a large-scale data center environment while maintaining security and flexibility.

According to an embodiment, the present technology can comprise an integrated mechanism for managing signatures and versioning. Preferably, the integrated mechanism is designed as a software component. This mechanism enables the tracking and management of various versions of data or information, ensuring that only authorised and authenticated changes are implemented. Advantageously, this feature enhances data security and integrity by providing a reliable means to maintain a record of all modifications made to the system or apparatus over time. Additionally, it allows for efficient version control, enabling users to easily revert to previous versions if necessary.

According to an embodiment, the present technology comprises a step of logging data. Preferably, this logging step records events for subsequent analysis. According to another embodiment, the present technology comprises a monitoring step. In this step, real-time or periodic observation of a system or process is carried out. Advantageously, the present technology may incorporate an auditing step. This step involves reviewing logs and other data to ensure compliance with policies or regulations. Security is another feature that can be incorporated into the present technology, as previously described. Preferably, this security aspect includes measures for protecting data from unauthorised access or manipulation.

According to an embodiment, the present technology comprises a step of reporting a state of a server in the computing infrastructure, the step comprising at least the following sub-steps:
- discovering the server using a server management module,
- retrieving configuration data from a Configuration Management Database (CMDB) module, and
- generating a report comprising the discovered information and the retrieved configuration data, preferably the report is then transmitted to an administrator or a monitoring system for further analysis and action.

According to an embodiment, the computing infrastructure 10 can comprise a private network for server discovery. Preferably, the private network is implemented as a local area network (LAN) and/or a wide area network (WAN) that is owned and operated by a user or an organization. Advantageously, using a private network for server discovery provides increased security and control over the discovery process compared to using public networks. The private network can be configured with access controls and firewalls to restrict unauthorized access and prevent potential attacks. Additionally, the use of a private network allows for faster and more reliable communication between servers on the network.
Advantageously, the use of a private network for server discovery can be particularly beneficial in environments where security and reliability are critical, such as in financial services, healthcare, or government applications. By controlling the discovery process within a private network, organizations can reduce the risk of unauthorized access or data breaches that can occur when using public networks for discovery. Additionally, according to an embodiment, the present technology can comprise implementing load balancing and failover mechanisms to ensure high availability and fault tolerance of the server infrastructure. Preferably, these mechanisms are integrated with the private network and can automatically detect and redirect traffic to available servers in case of failures or overload conditions.

According to an embodiment, the present technology comprises a step of managing Internet Protocol (IP) addresses in a computing infrastructure. This step can comprise the following sub-steps:
- Pre-calculating all required IP addresses based on a set of rules, such as template, subnet mask and number of hosts per subnet;
- Storing the calculated IP addresses;
- Transmitting the stored IP addresses to the appropriate components in the network through the communication module;

Preferably, each IP address is related to a template associated with a specific function within the computing infrastructure. Advantageously, this step of managing IP addresses can be dynamically updated as needed.

In more detail, according to an embodiment, this step begins by determining the necessary IP addresses based on predefined rules such as subnet mask and number of hosts per subnet. These calculations are performed offline and the resulting IP addresses are stored for later use. When required, the calculated IP addresses are transmitted to the appropriate components in the network through the communication module 230. Advantageously, each IP address is associated with a specific template that defines its function within the computing infrastructure 10. For example, an IP address used for a web server may be associated with a template that includes port numbers and other relevant configuration information. This allows for easy management and configuration of network components.
Furthermore, IP addresses can be dynamically updated to accommodate changes in the network environment. For instance, if a new component is added to the network, its IP address can be calculated and transmitted to the appropriate module and/or device using the present technology. Similarly, if an existing IP address needs to be changed, the calculation can be re-run and the updated IP address can be transmitted accordingly.

It has to be noticed that IP addresses must be provisioned, or reserved, when setting up the configuration of a new server 11. Failure to do so may result in connectivity issues between devices. Traditional methods of using IP auto-addressing services like DHCP are suitable for simple interfaces such as management networks but not for interconnecting network devices.

The presented solution aims to simplify the process of configuring network devices in a data center environment by utilizing templates.

For example, the present technology can comprise a first and a second template.

Preferably, the first template, referred to as "device types," can be configured to define the interfaces and their roles for various device types.

Preferably, the second template, named "network prefixes per roles," can be configured to specify IP address ranges available for different roles.

This approach streamlines the configuration process by automating the assignment of interfaces and IP addresses based on a device's role and type.

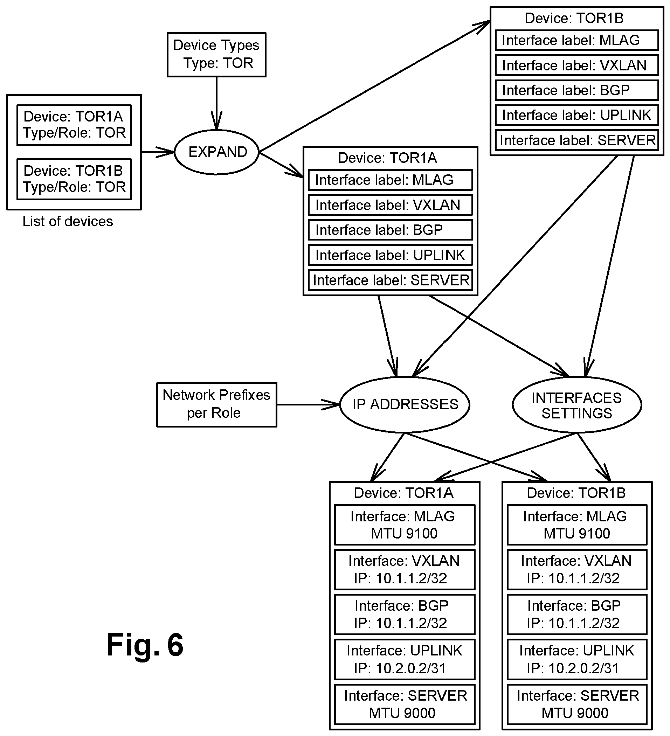

Figure 6 illustrates the workflow switch configuration. This workflow begins with providing a list of devices, such as switches and/or servers, along with their respective roles and types.

According to an embodiment, the first step in the process is to expand the given devices using the "device types" template. This expansion results in devices having their associated interfaces labeled. Subsequently, two parallel processes are initiated. These processes parse the interface lists for each device and determine IP addresses based on the device's role and label. By utilizing templates and parallel processing, the solution efficiently generates a high-level configuration file for network devices.

Preferably, the first step in the workflow involves providing a list of devices, including switches and their respective roles and types. This information is crucial for determining the interfaces and IP addresses required for each device based on its role within the network infrastructure.

Next, the configuration process begins by expanding the given devices using the "device types" template. This expansion results in a more detailed representation of the devices, including their associated interfaces labeled according to their roles. For instance, if we have a switch with the role of a Top-of-Rack (ToR) switch, its interface labels would be defined based on the device types of template for ToR switches.

Following this expansion step, two parallel processes are initiated: one for parsing the list of interfaces per device and another for calculating IP addresses and completing specific attributes based on the role of the device and the label of the interface. These processes run concurrently to optimize efficiency in the configuration process.

The first parallel process, which handles interface parsing, determines the IP addresses and other relevant configurations for each interface based on its label and the role of the device it is associated with. For example, if an interface is labeled as a management interface, it would be configured using the network prefixes per roles template for management interfaces.

The second parallel process, which handles IP address calculation and attribute completion, uses the "network prefixes per roles" template to determine the available IP address ranges for each role. Based on this information, it calculates the specific IP addresses required for each interface based on its label and the role of the device it is associated with. Additionally, it completes any other necessary attributes for the interfaces, such as VLANs or subnet masks.

Once both parallel processes have completed their tasks, a high-level configuration file for the network devices is generated. This file contains all the necessary information to configure the switches and other network devices within the data center infrastructure. The figure 6 illustrates this workflow in a clear and concise manner, highlighting the importance of templates and parallel processing in optimizing the switch configuration process.

As previously mentioned, the advantages of this template-based solution comprise improved efficiency and reduced errors in configuring network devices. The automation of interface assignment and IP address calculation ensures consistency across the data center infrastructure. Additionally, the parallel processing of multiple devices allows for a more scalable approach to managing large numbers of devices. This solution offers organizations an effective way to manage their network configurations while maintaining security, reliability, and flexibility in their data center environment.

According to an embodiment, the present technology can be configured to manage a fleet of distributed computing infrastructure 10, i.e. data centers. Preferably, each computing infrastructure 10 in the fleet can be geographically dispersed and operates independently. Advantageously, the present technology comprises monitoring the performance of each computing infrastructure 10 in real-time and allocating workloads accordingly to optimize resource utilisation and improve overall system efficiency. Furthermore, the present technology may comprise implementing automated failover mechanisms to ensure high availability and disaster recovery capabilities. Additionally, the present technology can comprise integrating security measures to protect data and prevent unauthorized access to the data centers in the fleet. Moreover, the present technology may involve using advanced analytics and machine learning algorithms to predict and prevent potential issues before they occur, thereby reducing downtime and improving system reliability. Advantageously, the present technology can be implemented using a cloud-based platform or a decentralized network architecture for scalability and flexibility.

According to an embodiment, the present technology comprises a step of managing a fleet of distributed computing infrastructures, the step comprising at least the following sub-steps:
- deploying and configuring computing components in each computing infrastructure using automated processes;
- pulling configurations across all computing infrastructures;
- monitoring performance and resource utilization; and
- implementing security measures to protect against unauthorized access or data breaches;
- preferably, providing features such as logging, monitoring, auditing, and key management for distributed key management and auditing.

According to an embodiment, the present technology can be configured to mutualise at least one switch 12 between a plurality of deployment modules 220. Preferably, each deployment module 220 is an OpenStack environment. Advantageously, this arrangement allows for multiple Network Operating Gateways (NOGs) module 250 to utilize the same switch 12.

According to another embodiment, in the absence of mutualising switches 12 between NOGs 250, each NOG would require its own dedicated switch 12. This could lead to increased costs and complexity. Advantageously, one switch 12 can be shared among multiple NOGs 250. This reduces the overall number of required switches 12 and lowers costs. Furthermore, according to an embodiment, each client, i.e. user, is associated with a specific NOG 250. However, due to the mutualised switch 12 arrangement, multiple clients from different NOGs 250 may transmit data through the same switch 12 at different times. This does not cause any interference or conflicts, as the NOG 250 association ensures proper routing and management of the transmitted data.

According to an embodiment, the present technology can comprise a mutualisation step of managing network infrastructure in a computing infrastructure. Preferably, the step can comprise at least enabling multiple deployment modules 220 to share at least one switch 12 by synchronizing their configurations and allowing efficient utilization of resources.

According to an embodiment, the present technology relates to a computer-readable storage medium storing instructions for implementing the present technology, and therefore being configured to deploy and manage through autonomous initialization and configuration processes.

According to an embodiment, the first portion of the instructions on the computer-readable storage medium pertains to the automatic initialisation of network configurations in the computing infrastructure 10. This process can begin by pre-generating YAML files, which contain necessary information for configuring network equipment. These YAML files can be converted into usable configuration files using processes under Netbox and other tools and/or modules.

According to an embodiment, the second part of the instructions deals with the control mechanism that enables request instantiation in the computing infrastructure 10. This mechanism involves comparing real configurations with their logical counterparts using modules like Ironic 270 and Netbox 210, for example. Upon detection of a new server 11, OpenStack 220 initiates actions to configure it automatically, including installing the initial operating system image, registering the server 11 with Netbox 210, and enriching its inventory. Once the server's configuration is updated in Netbox 210, Dicious 230 generates network configuration files for OpenStack 220 to use, enabling the creation of virtual networks, ports, and other configurations required for the server to function correctly.

According to an embodiment, the third part of the instructions focuses on the parallel execution of configuration tasks using Ironic 270 when a new server 11 is added to the computing infrastructure. Ironic 270 manages power states, deploys operating system images and configurations, and provisions new servers with appropriate network configurations.

According to an embodiment, the fourth part of the instructions deals with synchronizing multiple controllers in the computing infrastructure 10 environment, specifically Netbox 210 and OpenStack 220. This synchronization is essential for maintaining consistency between the physical network configuration and the virtualized network configurations managed by OpenStack 220.

According to an embodiment, the fifth part of the instructions involves the parallel provisioning of configurations for multiple pieces of equipment in the computing infrastructure 10 using Netbox 210 and OpenStack 220. This process ensures that new equipment is quickly integrated into the existing infrastructure without causing unnecessary downtime or configuration conflicts.

According to an embodiment, an optional feature of the present technology relates to encryption for data protection. The objective is to ensure that sensitive information remains confidential even if the physical security of the servers is compromised. This encryption feature can be applied transparently at the disk level using Self-Encrypting Drives (SEDs) without requiring any modification to the operating system or application layer.

According to an embodiment, the present technology relates to a processing system 200 for automated deployment of a computing infrastructure 10. This processing system 200 comprises at least one un-provisioned server 11 and at least one switch 12. The processing system 200 also comprises a processor 300 and a computer-readable medium storing instructions that, upon being executed by the processor 300, cause the execution of various software components.

As previously described, according to an embodiment, the software components comprise at least:
- a Configuration Management DataBase (CMDB) module 210, preferably configured to manage and store inventory data relating to the un-provisioned server 11 and the switch 12. Advantageously, this data can comprise IP addresses of switches 12, interfaces, VLANs, region names, and configuration templates;
- a deployment module 220, preferably configured to deploy the computing infrastructure 10. Advantageously it is configured to receive instructions from the CMDB module 210 regarding the inventory data of the un-provisioned server 11 and the switch 12. Then, the deployment module 220 provisions the network stack with this information, pushing the configurations onto the switches 12 after boot;
- a communication module 230, preferably configured to allow communication between the CMDB module 210 and the deployment module 220 and to manage at least one Dynamic Host Configuration Protocol (DHCP) interface module. Advantageously the communication module 230 initializes the discovery process by configuring interfaces in a Discovery VLAN using a server management module 270. Once the rack is provisioned, each server 11 is discovered at boot by the deployment module 220 and becomes manageable by a user;
- an configuration module 240, preferably configured to initialize the CMDB module 210 with information relating to the switch 12 and its configuration. This data can comprise IP addresses of switches 12, interfaces, VLANs, region names, and configuration templates. From this information, the configuration module 240 is configured to generate rendered configurations for DHCP services on IPMI and management networks, as well as for switches 12, allowing their provisioning;
- a Network Operations Gateway (NOG) module 250, preferably configured to pilot the switch 12 by receiving configurations data from the CMDB module 210 and applying the received configurations to the switch 12. This process ensures that the network infrastructure is properly initialized and configured during the deployment of the computing infrastructure 10;
- a Domain Name System (DNSMasq) module 260. DNSMasq 260 is configured to manage the DNS services in the computing infrastructure 10. It uses standard protocols like DHCP to answer requests from servers 11 and provides them with the necessary configurations.
- Optionally, a server management module 270, preferably configured to manage and control the provisioning, deployment, and lifecycle of un-provisioned servers 11 in the computing infrastructure 10 environment. It interacts with other components such as the deployment module 220 and the network virtualization and orchestration component 290, for example Neutron, to ensure seamless integration of new servers 11 into the existing infrastructure while maintaining security and consistency ;
- Optionally, a key management module 280, preferably configured to manage and securely store encryption keys for various components of the computing infrastructure 10, ensuring that only authorized users have access to these keys. It automates the process of generating, distributing, and rotating encryption keys during server provisioning and deployment;
- Optionally, a network virtualisation and orchestration module 290, called Neutron, preferably configured to manage and create virtual networks, subnets, routers, firewalls, load balancers, and other related networking components within the computing infrastructure 10. It enables the automation of network configuration and management tasks, ensuring efficient and consistent deployment and maintenance of network services in the computing infrastructure 10 environment.

According to an embodiment, the processing system 200 can also comprise at least one NOG master 251 and at least a plurality of NOG slaves 252. The NOG master 251 holds data about a plurality of switches 12, while each NOG slave 252 contains data about only one switch 12 from the plurality of switches 12. Preferably, in this multi-NOGs configuration, the master NOG 251 is capable of configuring all shared elements as it has knowledge of all switches 12. In contrast, each slave NOG 252 only possesses information regarding its respective switch 12 and does not have access to the configurations of other switches 12.

According to an embodiment, to address the challenges associated with managing large network fabrics using a single automation instance of a NOG in data centers, a new solution is required. Indeed, there is a need for multiple NOG instances to improve availability, resiliency, and security while maintaining the ability to share common information for local configuration management.

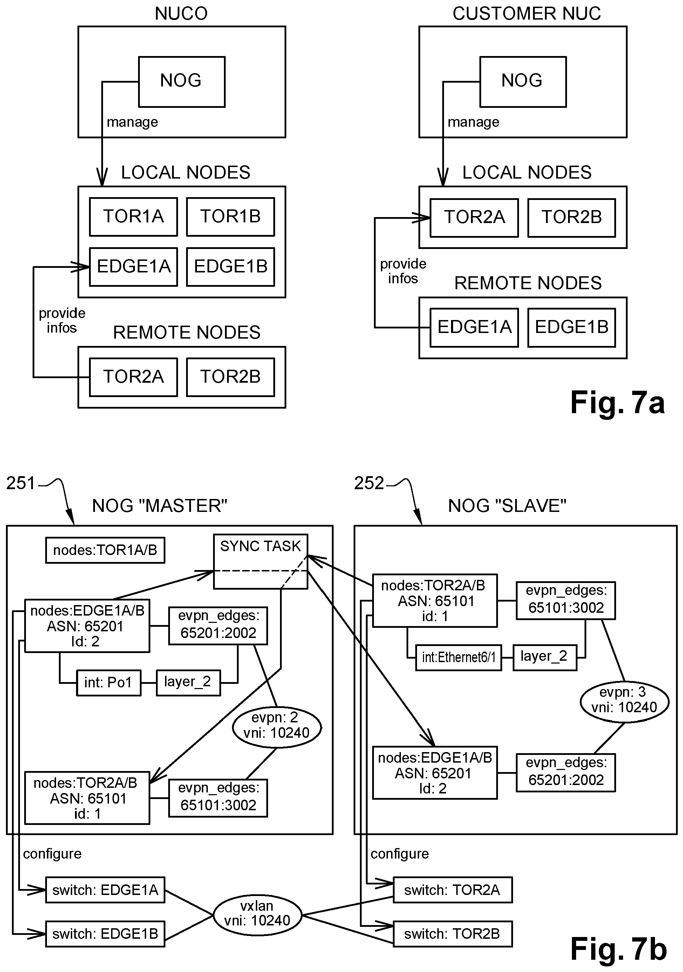

According to an embodiment, and as illustrated by figures 7a and 7b, the present technology offers to extend an existing NOG architecture to support multiple instances. Each MiniPod, i.e. group of racks, can run its local NOG instance with an associated orchestrator, for example, the deployment module 220, also called OpenStack. Preferably, a MiniPod is a group of a predetermined number of racks managed by the same deployment module 220. This setup eliminates the need for a centralized single-point-of-failure instance and allows for better management of different areas of responsibility within the network fabric.

One key advantage of this solution is that there will be no direct interaction between shared devices and local instances, which significantly reduces the attack surface and enhances security. However, it's essential to ensure that these local instances can still manage their local configurations effectively.

According to an embodiment, to achieve this goal, the present technology provides a mechanism for sharing common information between the local NOG instances. This could be accomplished through a centralized database or a distributed data store accessible to all instances. By enabling each instance to access and utilize the shared information, they will be able to manage their local configurations while maintaining consistency with the overall network fabric configuration.

According to an embodiment, the proposed solution for managing computing infrastructure networks comprises splitting the Network Operations Gateway (NOG) into central, i.e. master, and local, i.e. slave, instances, each managed by a separate orchestrator. This design allows for better availability, resiliency, and security as it eliminates the need for a single-point-of-failure instance and enables different areas of responsibility within the network fabric. The central NOG instance, hosted on the main controller (NUC0), manages local TOR (Top-Of-Rack) and EDGE devices, while each customer controller hosts a local NOG instance to manage its dedicated TOR devices.

Figures 7a and 7b are diagrams that illustrate the concept of multiple instances of Network Operations Gateways (NOGs) in a computing infrastructure 10 according to an embodiment of the present technology. These figures demonstrate how a central NOG instance manages local TOR (Top-Of-Rack) devices and EDGE devices, while each customer controller hosts a local NOG instance to manage its dedicated TOR devices.

According to an embodiment, and as illustrated by figure 7a, in this high-level design, the central NOG instance is responsible for managing local TOR and EDGE devices, providing network services connectivity with external networks or devices. The local NOG instances, on the other hand, manage their respective dedicated TOR devices, enabling customers to manage their own local network resources through their local NOG instance. To facilitate sharing information for building shared services, NOG instances can declare a node as "remote," which does not require configuration management.

The benefits of this solution include improved availability and resiliency due to the elimination of a single-point-of-failure instance and the ability to manage different areas of responsibility within the network fabric. Additionally, the design offers enhanced security as each customer has control over its local network resources through its dedicated NOG instance. The capability to share information between instances allows for the building of shared services while minimizing direct interaction between shared devices and local instances.

According to an embodiment, the Local NOG, also called the slave NOG, is responsible for managing the Top-of-Rack (ToR) devices within a rack, while being aware of remote nodes outside its scope but unable to change their configurations. It is addressed by a local orchestrator. On the other hand, the Central NOG manages nodes that are located outside of racks or not managed by a Local NOG instance. The Central NOG creates and deletes services (evpnedges) on these nodes to allow configuration on the local ToR and is aware of ToR devices as remote nodes. It syncs tasks, pushes configurations, and manages these remote nodes when needed.

According to an embodiment, each Local NOG, i.e. the slave NOG, plays a role in managing the network infrastructure within a rack, ensuring that the ToR devices are configured correctly and functioning optimally. By being aware of remote nodes, it can utilize their information for local purposes but does not have the ability to change their configurations. This separation of responsibilities allows for better organization and management of the data center network. The Local NOG is a component allowing to maintain the overall network infrastructure while ensuring that each rack operates efficiently and effectively.

According to another embodiment, the Central NOG, i.e. the master NOG, on the other hand, focuses on managing nodes that are located outside of racks or not managed by a Local NOG instance. It acts as a central hub for managing extended services between local and remote nodes. It enables configuration on the local ToR devices. The Central NOG's ability to sync tasks and manage remote nodes ensures that the entire data center network remains consistent and cohesive. This separation of responsibilities between Local and Central NOG instances allows for efficient management and maintenance of large-scale data center networks.

According to an embodiment, figure 7b illustrates a low-level design for configuring a service between two Network Operations Gateway (NOG) instances, referred to as "master" and "slave." These NOG instances manage different parts of the network infrastructure, with the master instance managing devices within one area and the slave instance handling devices in another area. The service can be identified by a VxLAN identifier, which is used on both NOG instances to ensure proper synchronization. Preferably, the present technology can comprise a synchronization process involves in creating specific objects, EDGE1A/B on the slave instance and TOR2A/B on the master instance, and completing their configuration with evpn_edges objects on each side.

According to an embodiment, the synchronization process configures services between NOG instances. For example, It can begin by creating the EDGE1A/B objects on the slave instance and the TOR2A/B objects on the master instance. These objects represent the network devices that need to be configured as part of the service. Once these objects have been created, evpn_edges objects are added to each side to complete the configuration process. The evpn_edges objects enable the communication between the devices and ensure that the service functions correctly within the data center infrastructure.

The low-level design for configuring services between NOG instances provides several advantages. By using a VxLAN identifier, the synchronization process ensures that both NOG instances have consistent information about the network devices and their configurations. This reduces the likelihood of errors and inconsistencies in the network infrastructure. Additionally, by allowing each NOG instance to perform configuration tasks on their relevant switches, the design enables efficient management of the data center environment while maintaining security and reliability.

According to an embodiment, the multi-NOG configuration in the processing system offers several technical advantages:
- Isolation of networks: By having multiple NOGs, each responsible for managing a specific switch or a group of switches, the network infrastructure is isolated, reducing the risk of unintended changes or misconfigurations that could affect the entire data center.
- Security: The multi-NOG configuration enhances security by limiting access to configurations and control of switches to only those authorized personnel who manage the specific NOG. This reduces the attack surface and minimizes the potential impact of a security breach.
- Scalability: As the data center grows, adding more switches can be easily managed by creating new NOGs without affecting the existing infrastructure or requiring extensive changes to the management system.
- Flexibility: Each NOG slave can be configured independently, allowing for customization and tailored solutions for specific use cases or requirements within the data center.

According to an embodiment, the present technology comprises a multi-controllers sub-system for managing and automating the deployment and configuration of the computing infrastructure 10, the multi-controllers sub-system comprising:
- multiple controllers, each responsible for managing a subset of the infrastructure, and
- a communication module enabling seamless communication between the controllers.

This design enhances scalability, improves fault tolerance, and ensures efficient resource utilization by allowing for parallel processing and load balancing among the controllers.

According to an embodiment, and as previously described, the processing system 200 is configured to automate the deployment and management of computing infrastructure 10, including un-provisioned servers 11 and switches 12, preferably in a data center environment.

Advantageously, this processing system offers several technical advantages:
- Minimal footprint: The automated deployment of computing infrastructure 10 using the processing system 200 reduces the need for manual intervention, resulting in a smaller operational footprint and faster deployment times.
- Automated infrastructure deployment: The processing system 200 automates the process of deploying computing infrastructure 10, including servers 11 and switches 12, reducing errors and inconsistencies that can occur with manual methods.
- Optional security measures against unwanted physical accesses: The processing system 200 can comprise features to ensure secure boot and disk encryption for the computing infrastructure 10 components, providing an additional layer of security against unauthorized access.
- Real-time feedback: The synchronization process between Netbox 210 and OpenStack 220 enables real-time feedback, allowing administrators to monitor and manage the computing infrastructure 10 network more effectively.
- Parallel processing: The parallel provisioning of configurations for multiple pieces of equipment in a computing infrastructure 10 using the CMDB module 210 and the deployment module 220 ensures that new equipment is quickly integrated into the existing infrastructure without causing unnecessary downtime or configuration conflicts.
- Encryption for data protection: The optional encryption feature for data protection ensures that sensitive information remains confidential even if the physical security of the servers 11 is compromised.

According to an embodiment, the present technology concerns the automatic initialisation of network configurations in a data center, i.e. a computing infrastructure 10. This process 100 can, for example, begin by pre-generating YAML files containing the necessary information to configure network equipment. These YAML files are converted into usable configuration files using processes under a Configuration Management DataBase (CMDB) module 210 and other tools.

Preferably, upon receiving the pre-filled response file, the system 200 executes several steps:
- Network configurations are created to establish virtual networks necessary for managing server communications and various network interfaces.
- DNS mask configuration: The DNS mask is configured with required information, acting as an interface between physical assets and the system 200. It uses standard protocols like DHCP to answer requests from servers and provide them with necessary configurations.
- Network equipment discovery: Once the DNS mask is configured, network switches 12 can be discovered, and their configurations are updated accordingly based on the information in the YAML files. The switches 12 will then reboot, apply new configuration, and become available for further management.

According to an embodiment, the present technology revolves also around a control mechanism that enables request instantiation in a data centre 10. This mechanism involves comparing real configurations with their logical counterparts using tools like Ironic 270 and Netbox 210:
- Server discovery: When a new server 11 is detected, a deployment module 220, using for example OpenStack, initiates actions to configure it automatically, including installing initial operating system image, registering the server 11 with Netbox 210, and enriching its inventory.
- Configuration synchronization: Once the server's configuration is updated in Netbox 210, Dicious 230 generates necessary network configuration files for OpenStack 220 to use, enabling creation of appropriate virtual networks, ports, and configurations required for the server 11 to function correctly.
- Server boot: Once all configurations are in place, the server 11 can be booted, and it will begin communicating with OpenStack 220 via Ironic 270. This communication enables discovery, enrollment, and management by OpenStack 220 using standard procedures.

According to an embodiment, the present technology also involves parallel execution of configuration tasks using Ironic 270:
- Power management: Ironic 270 manages power states of servers 11 to ensure they are ready for deployment or maintenance activities, including turning servers 11 on or off as needed.
- Image deployment: Ironic 270 can deploy operating system images and other necessary configurations to newly added servers 11, ensuring consistency and minimizing downtime.
- Provisioning: Ironic 270 can provision new servers 11 with appropriate network configurations, allowing them to integrate seamlessly into the existing data center infrastructure 10. This includes configuring virtual interfaces, IP addresses, and routing tables.

According to an embodiment, the present technology deals with synchronizing multiple controllers in a data centre 10 environment, specifically Netbox 210 and OpenStack 220:
- Configuration update: When a change is made to the network configuration in Netbox 210, it is propagated to all connected OpenStack 220 controllers through well-defined APIs or communication mechanisms.
- Automatic network reconfiguration: Once OpenStack 220 controllers receive updated configuration, they automatically reconfigure virtual networks and other components as needed to maintain consistency with physical network.
- Real-time feedback: This synchronisation process enables real-time feedback between Netbox 210 and OpenStack 220, allowing administrators to monitor and manage the data center 10 network more effectively.

According to another embodiment, the present technology also involves parallel provisioning of configurations for multiple pieces of equipment in a data centre 10 using Netbox 210 and OpenStack 220:
- Configuration import: When new equipment is added to the data centre 10, its configuration information is imported into Netbox 210.
- Automated configuration propagation: Once configuration information is imported into Netbox 210, it is automatically propagated to all connected OpenStack 220 controllers through well-defined APIs or communication mechanisms.
- Parallel processing: OpenStack 220 controllers process the configuration information concurrently, enabling multiple pieces of equipment to be configured and integrated into data center 10 network more efficiently.
- Feedback and validation: This process enables real-time feedback between Netbox 210 and OpenStack 220, allowing administrators to validate configuration changes and ensure all equipment is functioning correctly.

The present technology also includes an optional aspect for encryption for data protection using Self-Encrypting Drives (SEDs) and Ironic 270 for automatic management of encryption keys.

Additionally, the present technology relates to improved provisioning processes, Secure Boot technology, and Data Centre as a Service with distributed auditing and key management. These features offer significant improvements in the area of data security for large-scale data centres by implementing encryption at the disk level using Self-Encrypting Drives, automating provisioning processes with Ironic 270, enhancing boot security through Secure Boot technology, and enabling clients to have full control over their infrastructure while maintaining data security with distributed key management and auditing features.

The method 800 for reporting the states of the components of the computing infrastructure 10 is now detailed.

A state of a component can be understood as characteristics of the functioning of the component, that evolve over time. Examples of states will be given later. The method 800 ensures to reliably follow the evolution of the states, such that an event related to any change in the states is duly detected by method 800.

As can be seen from figures 8 and 9, the method 800 comprises a step 801 during which a module, called communication module CM, receives data D at a given frequency, called real-time frequency, noted fRT. The communication module is advantageously the communication module 230 in the context of the method 100, Dicious, as already described.

The data D are preferably transported in messages M.

The messages M are sent by a source S in a previous step 802. The source S is advantageously the server management module 270 in the context of the method 100, Ironic, as already described.

The data D of the messages M comprise features of the states of each component of the computing infrastructure 10, as will be detailed later. These states are called true states.

The communication module 230 and the server management module 270 advantageously communicate via a message broker MB.

Depending on the content of the messages M, the communication module 230 updates at least a database, for instance of the Configuration Management Database CMDB module, Netbox, 210, and/or the network virtualisation and orchestration module 290, Neutron, as already described. In the databases are stored the updated states of the components of the computing structure 10, called registered states.

In other words, at each event related to a change in a state of a component of the computing infrastructure 10, the database(s) is/are updated at the real-time frequency fRT. This update is called nominal update.

At step 803, the communication module 230 executes a safety operation, at a safety frequency, noted fS. The safety frequency fS is strictly greater than the real-time frequency fRT.

The safety operation comprises a step 804 of comparing each true state to each corresponding registered state of the database, and, when the corresponding registered state differs from the true state, a step 805 of replacing the registered state by the true state. This update is called safety update.

Preferably, during the safety operation, the communication module requests from an API of Ironic 270 the true states of the components of the computing infrastructure 10 at a step 806 preliminary to the comparing step 804.

The real-time way or synchronization (step 801) ensures a fast synchronization of the database(s) linked to Dicious, while the safety operation or safety synchronization (steps 804, 805, 806) ensures a reliable synchronization of the database(s) linked to Dicious, hence, a trustworthy information of the states of the components of the computing infrastructure 10.

Thanks to both the real-time way and the safety operation, there is provided consistent information related to the components of the infrastructure 10 registered as fast as possible. The differently, the method 800 has great performance and reduced error rate because of the combination of the real-time way and the safety operation. The method 800 also presents a reduced resources cost thanks to this synergetic association of the real-time way and the safety operation.

The method 800 helps compensate defaults in the infrastructure, or if the network is of poor quality, or if there happen power cuts.

Preferably, the nominal update and the safety update are treated by a same treating module of the communication module 230, a same structure of input being applied to the received data and the replacing data, and a same structure of treatment being applied to the input. This same treatment optimizes the resources of Dicious since the transformation it applies to the input is undifferentiated whether the data are from the real-time way or the safety operation.

In other words, whatever the source (real-time way or safety operation), a same treatment is applied to the data that are received by Dicious.

The states of the components are characteristics relating to the functioning of the components of the infrastructure 10.

For instance, the states of the components can be a status (switched-on or switched-off) of a server of the computing infrastructure 10, and/or a status of the network interface.

For instance, the discovery process can be considered, from a temporal perspective, as the first state report by the method 100 when used in the context of the automated deployment. In this case, the state of the component is the detection of the at least one new server and/or the port number and/or the switch number of each new server 11.

The differently, each time Ironic discovers a new server, each time a new port associated to the new server is created, each time a new switch is declared, the method 800 is used, the real-time way and the safety operation increasing the performance and convergence of the already described method 100.

The real-time frequency fRT is preferably shorter than 5s, preferably shorter than 1s.

The safety frequency fS is either pre-determined or adaptative of the computing infrastructure 100. The safety frequency fS is comprised between 6s to 16min, preferably between 1min and 12min, preferably between 2min and 7min.

The safety frequency fS depends on the size of the computing infrastructure.

Preferably, the safety frequency is determined in a feedback loop depending on the executing time of the safety operation. For instance, if the system diverges, the executing time increases because of an increase in the error rate, which leads the loop to increase the safety frequency.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is, therefore, intended to be limited solely by the scope of the appended claims.

### References

- 10: A computing infrastructure
- 11: A server
- 12: A switch
- 100: A computer-implemented method for automated deployment of at least one computing infrastructure
- 110: Accessing a computer-readable medium
- 120: Calculating data
- 130: Initialising software components
- 140: Determining configurations
- 150: Provisioning at least one network stack
- 160: Declaring at least one network
- 170: Synchronising the deployment module with the CMDB module
- 180: Booting at least one un-provisioned server
- 200: A processing system
- 210: A Configuration Management DataBase (CMDB) module
- 220: A deployment module
- 230: A communication module
- 240: A configuration module
- 250: A Network Operations Gateway (NOG) module
- 251: A NOG master
- 252: A NOG Slave
- 260: A Domain Name System module
- 270: A server management module
- 280: A key management module
- 290: A network virtualisation and orchestration component
- 300: A processor
- 800: A method for reporting the states of the components
- 801, 802: Steps (real-time way) of method 800
- 803 to 806: Steps (safety operation) of method 800

## Claims

1. A computer-implemented method (100) for managing a computing infrastructure (10), the computing infrastructure (10) having a set of components comprising at least one un-provisioned server (11) and at least one switch (12), each component being in a true state that can change over time, the method (100) comprising the following:
accessing (110) a computer-readable medium comprising instructions which, upon being executed by a processor (300), causes the processor (300) to execute software components comprising:
∘ a server management module (270) configured to send data related to the true states of the components of the computing infrastructure (10);
∘ a communication module (230) configured to receive the data sent by the server management module (270); and at least one of:
▪ a Configuration Management Database, CMDB, module (210) and a network virtualisation and orchestration module (290), the CMDB module (210) and/or the network virtualisation and orchestration module (290) are configured to store the data received by the communication module, referred to as registered data, in a database,
wherein,
the communication module (230) receives the data related to the true states of the components sent by the server management module (270) at a real-time frequency and depending on the received data, updates the stored registered data, the updating step referred to as a nominal update;
the communication module (230) executes a safety operation at a safety frequency, the safety operation comprising:
∘ comparing each true state of each component of the computing infrastructure (10) to each registered state of each component registered in the database; and
∘ when the corresponding registered state differs from the true state, updating the database by replacing the registered state by the true state, called replacing data, the update step being called safety updating;
∘ wherein the real-time frequency being less than the safety frequency.

2. The method of claim 1, wherein the nominal update and the safety update are treated by a treating module of the communication module (230), in which a same structure of input being applied to the received data and the replacing data, and a same structure of treatment being applied to the input.

3. The method of claim 1 or 2, wherein the safety frequency is either pre-determined or adaptative to the computing infrastructure (10).

4. The method of claim 3, wherein the safety frequency is determined in a feedback loop depending on an executing time of the safety operation.

5. The method of claims 3 or 4, wherein the real-time frequency is less than 5s, and the safety frequency ranges between 6s to 16min.

6. The method of any of one of claims 1 to 5, wherein the set of components further comprises a server and a network interface, wherein the true state of the components represents a status of the server or a status of the network interface.

7. The method of any of one of claims 1 to 5, wherein the communication module (230) operates to:
(a) allow communication between the Configuration Management DataBase module (210) and a deployment module (220) configured to deploy the computing infrastructure (10); and (b) manage at least one Dynamic Host Configuration Protocol, DHCP, interface module, in which the software components further comprise:
∘ a configuration module (240) configured to initialize the Configuration Management DataBase module (210) with information relating to the at least one switch (12) and its configuration;
∘ a Network Operations Gateway, NOG, module (250) configured to manage and control the at least one switch (12) by receiving configurations data from the CMDB module (210) and by applying the received configurations to the at least one switch (12); and
∘ a Domain Name System, DNS, module (260) configured to manage the Domain Name System services in the computing infrastructure (10);
the method further comprising:
• calculating (120) data for initializing the Configuration Management DataBase module (210), the calculated data comprising at least one Internet Protocol, IP, address of the at least one switch (12);
• initializing (130), by the configuration module (240), at least a part of the software components, by:
∘ initializing the Configuration Management DataBase module (210) using the calculated data; and
∘ configuring the Domain Name System module (260) with configurations from the CMDB module (210);
• determining (140), using the Configuration Management DataBase module (210), configurations for:
∘ the communication module (230) on at least one Intelligent Platform Management Interface, IPMI, and on at least one management network; and
∘ the at least one switch (12) being configured to allow its provisioning based on the calculated data from the Configuration Management DataBase module (210);
• provisioning (150) at least one network stack with provisioning data from the Configuration Management DataBase module (210), the provisioning data comprising data relating to network devices, interfaces, networks and the configurations determined by the CMDB module (210), the provisioning (150) comprising:
∘ provisioning the DNS module (260);
∘ provisioning the Network Operations Gateway module (250);
• declaring (160) at least one network in the deployment module (220);
• synchronizing (170) the deployment module (220) with the Configuration Management DataBase module (210), wherein in response to the synchronizing, the deployment module (220) starts a server discovery process using the communication module (230); and
• booting (180) the at least one un-provisioned server (11) to be discovered by the deployment module (220).

8. The method (100) according to claim 7, wherein the deployment module (220) is further configured to:
• Detect at least one new server (11) using the communication module (230);
• Send the port number and/or the switch (12) number of the new server (11) to the Configuration Management DataBase module (210) using the communication module (230); and
• Remove a discovery mode of the new server (11) using the communication module (230).

9. The method (100) of any of one of claims 1 to 8, wherein the true state of the components is the detection of the at least one new server and/or the port number and/or the switch number of the new server (11).

10. The method (100) of any of claims 7-9, wherein the network virtualisation and orchestration module (290) is configured to create and manage virtual networks, subnets, routers, firewalls, load balancers, and other related networking components within the deployment module (220); and
wherein the server discovery process further comprises the following steps:
• Initialization:
∘ powering off a server (11), wherein the server (11) is unknown to the deployment module (220) and to the Configuration Management DataBase module (210);
∘ configuring network interfaces in a discovery virtual local area network, VLAN, mode by the network virtualisation and orchestration component (290);
• Discovery:
∘ powering the server (11) on;
∘ booting the server (11) through the network;
∘ loading, by the server (11), at least one agent configured to analyse it and the at least one switch (12), and generating a report comprising results of the analysis, and sending the report to the deployment module (220);
∘ performing synchronisation between the deployment module (220) and the Configuration Management DataBase module (210) using the communication device (230);
• End of discovery:
∘ powering the server (11) off;
∘ unconfiguring the network interfaces from the discovery virtual local area network, VLAN, mode using the network virtualisation and orchestration component (290) and put in an isolation mode (quarantine).

11. The method (100) of any one of claims 7 to 10, wherein a deletion of a server (11) from the deployment module (220) results in deletion of the corresponding entry in the database and setting back the discovery process.

12. A processing system (200) for managing a computing infrastructure (10), the processing system (200) comprising a processor (300) which, upon executing computer-readable instructions, performs the method of any one of claims 1 to 11.

13. A computer-readable storage medium storing instructions that, upon being executed by a processing system, causes the processing system to perform the method of any one of claims 1 to 11.

## Patentansprüche

1. Computerimplementiertes Verfahren (100) zum Verwalten einer Datenverarbeitungsinfrakonstruktion (10), wobei die Datenverarbeitungsinfrakonstruktion (10) einen Satz von Komponenten aufweist, der mindestens einen nicht provisionierten Server (11) und mindestens einen Switch (12) umfasst, wobei sich jede Komponente in einem wahren Zustand befindet, der sich über die Zeit ändern kann, wobei das Verfahren (100) Folgendes umfasst:
Zugreifen (110) auf ein computerlesbares Medium, das Anweisungen umfasst, die, wenn sie von einem Prozessor (300) ausgeführt werden, den Prozessor (300) veranlassen, Softwarekomponenten auszuführen, die Folgendes umfassen:
∘ ein Server-Managementmodul (270), das konfiguriert ist, um Daten zu senden, die sich auf die wahren Zustände der Komponenten der Datenverarbeitungsinfrakonstruktion (10) beziehen;
∘ ein Kommunikationsmodul (230), das konfiguriert ist, um die vom Server-Managementmodul (270) gesendeten Daten zu empfangen;
und mindestens eines von:
▪ einem Configuration Management Database-, CMDB-, Modul (210) und einem Netzwerk-Virtualisierungs- und Orchestrierungsmodul (290), wobei das CMDB-Modul (210) und/oder das Netzwerk-Virtualisierungs- und Orchestrierungsmodul (290) konfiguriert sind, um die vom Kommunikationsmodul empfangenen Daten, die als registrierte Daten bezeichnet werden, in einer Datenbank zu speichern,
wobei,
das Kommunikationsmodul (230) die sich auf die wahren Zustände der Komponenten beziehenden Daten, die vom Server-Managementmodul (270) gesendet werden, mit einer Echtzeitfrequenz empfängt und abhängig von den empfangenen Daten die gespeicherten registrierten Daten aktualisiert, wobei der Aktualisierungsschritt als ein nominelles Aktualisieren bezeichnet wird;
das Kommunikationsmodul (230) eine Sicherheitsoperation mit einer Sicherheitsfrequenz ausführt, wobei die Sicherheitsoperation Folgendes umfasst:
∘ Vergleichen jedes wahren Zustands jeder Komponente der Datenverarbeitungsinfrakonstruktion (10) mit jedem registrierten Zustand jeder Komponente, die in der Datenbank registriert ist; und
∘ wenn der entsprechende registrierte Zustand von dem wahren Zustand abweicht, Aktualisieren der Datenbank durch Ersetzen des registrierten Zustands durch den wahren Zustand, was als ersetzende Daten bezeichnet wird, wobei der Aktualisierungsschritt als Sicherheitsaktualisierung bezeichnet wird;
∘ wobei die Echtzeitfrequenz kleiner als die Sicherheitsfrequenz ist.

2. Verfahren nach Anspruch 1, wobei die nominelle Aktualisierung und die Sicherheitsaktualisierung durch ein Behandlungsmodul des Kommunikationsmoduls (230) behandelt werden, bei dem eine gleiche Eingabekonstruktion auf die empfangenen Daten und die ersetzenden Daten angewendet wird, und eine gleiche Behandlungskonstruktion auf die Eingabe angewendet wird.

3. Verfahren nach Anspruch 1 oder 2, wobei die Sicherheitsfrequenz entweder vorbestimmt ist oder an die Datenverarbeitungsinfrakonstruktion (10) adaptiv ist.

4. Verfahren nach Anspruch 3, wobei die Sicherheitsfrequenz in einer Rückkopplungsschleife abhängig von einer Ausführungszeit der Sicherheitsoperation bestimmt wird.

5. Verfahren nach Anspruch 3 oder 4, wobei die Echtzeitfrequenz weniger als 5s beträgt und die Sicherheitsfrequenz zwischen 6s und 16min liegt.

6. Verfahren nach einem der Ansprüche 1 bis 5, wobei der Satz von Komponenten ferner einen Server und eine Netzwerkschnittstelle umfasst, wobei der wahre Zustand der Komponenten einen Status des Servers oder einen Status der Netzwerkschnittstelle darstellt.

7. Verfahren nach einem der Ansprüche 1 bis 5, wobei das Kommunikationsmodul (230) wirksam ist zum: (a) Ermöglichen einer Kommunikation zwischen dem Configuration Management DataBase-Modul (210) und einem Bereitstellungsmodul (220), das zum Bereitstellen der Datenverarbeitungsinfrakonstruktion (10) konfiguriert ist; und (b) Verwalten mindestens eines Dynamic Host Configuration Protocol-, DHCP-, Schnittstellenmoduls, in dem die Softwarekomponenten ferner Folgendes umfassen:
∘ ein Konfigurationsmodul (240), das konfiguriert ist, um das Configuration Management DataBase-Modul (210) mit Informationen zu initialisieren, die sich auf den mindestens einen Switch (12) und seine Konfiguration beziehen;
∘ ein Network Operations Gateway-, NOG-, Modul (250), das konfiguriert ist, um den mindestens einen Switch (12) zu verwalten und zu steuern, indem es Konfigurationsdaten vom CMDB-Modul (210) empfängt und indem es die empfangenen Konfigurationen auf den mindestens einen Switch (12) anwendet; und
∘ ein Domain Name System-, DNS-, Modul (260), das konfiguriert ist, um die Domain Name System-Dienste in der Datenverarbeitungsinfrakonstruktion (10) zu verwalten;
wobei das Verfahren ferner Folgendes umfasst:
• Berechnen (120) von Daten zum Initialisieren des Configuration Management DataBase-Moduls (210), wobei die berechneten Daten mindestens eine Internet Protocol-, IP-, Adresse des mindestens einen Switches (12) umfassen;
• Initialisieren (130), durch das Konfigurationsmodul (240), mindestens eines Teils der Softwarekomponenten, durch:
∘ Initialisieren des Configuration Management DataBase-Moduls (210) unter Verwendung der berechneten Daten; und
∘ Konfigurieren des Domain Name System-Moduls (260) mit Konfigurationen vom CMDB-Modul (210);
• Bestimmen (140), unter Verwendung des Configuration Management DataBase-Moduls (210), von Konfigurationen für:
∘ das Kommunikationsmodul (230) auf mindestens einer Intelligent Platform Management Interface, IPMI, und auf mindestens einem Management-Netzwerk; und
∘ den mindestens einen Switch (12), der konfiguriert ist, um seine Provisionierung basierend auf den berechneten Daten vom Configuration Management DataBase-Modul (210) zu ermöglichen;
• Provisionieren (150) mindestens eines Netzwerk-Stacks mit Provisionierungsdaten vom Configuration Management DataBase-Modul (210), wobei die Provisionierungsdaten Daten in Bezug auf Netzwerkvorrichtungen, Schnittstellen, Netzwerke und die durch das CMDB-Modul (210) bestimmten Konfigurationen umfassen, wobei das Provisionieren (150) Folgendes umfasst:
∘ Provisionieren des DNS-Moduls (260);
∘ Provisionieren des Network Operations Gateway-Moduls (250);
• Deklarieren (160) mindestens eines Netzwerks im Bereitstellungsmodul (220);
• Synchronisieren (170) des Bereitstellungsmoduls (220) mit dem Configuration Management DataBase-Modul (210), wobei das Bereitstellungsmodul (220) in Reaktion auf das Synchronisieren einen Servererkennungsprozess unter Verwendung des Kommunikationsmoduls (230) startet; und
• Booten (180) des mindestens einen nicht provisionierten Servers (11), der durch das Bereitstellungsmodul (220) erkannt werden soll.

8. Verfahren (100) nach Anspruch 7, wobei das Bereitstellungsmodul (220) ferner konfiguriert ist zum:
• Detektieren mindestens eines neuen Servers (11) unter Verwendung des Kommunikationsmoduls (230);
• Senden der Portnummer und/oder der Nummer des Switches (12) des neuen Servers (11) an das Configuration Management DataBase-Modul (210) unter Verwendung des Kommunikationsmoduls (230); und
• Entfernen eines Erkennungsmodus des neuen Servers (11) unter Verwendung des Kommunikationsmoduls (230).

9. Verfahren (100) nach einem der Ansprüche 1 bis 8, wobei der wahre Zustand der Komponenten die Detektion des mindestens einen neuen Servers und/oder der Portnummer und/oder der Switchnummer des neuen Servers (11) ist.

10. Verfahren (100) nach einem der Ansprüche 7-9, wobei das Netzwerk-Virtualisierungs- und Orchestrierungsmodul (290) konfiguriert ist, um virtuelle Netzwerke, Subnetze, Router, Firewalls, Load Balancer und andere zugehörige Netzwerkkomponenten innerhalb des Bereitstellungsmoduls (220) zu erstellen und zu verwalten; und
wobei der Servererkennungsprozess ferner die folgenden Schritte umfasst:
• Initialisierung:
∘ Ausschalten eines Servers (11), wobei der Server (11) dem Bereitstellungsmodul (220) und dem Configuration Management DataBase-Modul (210) unbekannt ist;
∘ Konfigurieren von Netzwerkschnittstellen in einem Erkennungsmodus für ein virtuelles lokales Netzwerk, VLAN, durch die Netzwerk-Virtualisierungs- und Orchestrierungskomponente (290);
• Erkennung:
∘ Einschalten des Servers (11);
∘ Booten des Servers (11) über das Netzwerk;
∘ Laden, durch den Server (11), mindestens eines Agenten, der konfiguriert ist, um ihn und den mindestens einen Switch (12) zu analysieren, und Generieren eines Berichts, der Ergebnisse der Analyse umfasst, und Senden des Berichts an das Bereitstellungsmodul (220);
∘ Durchführen einer Synchronisation zwischen dem Bereitstellungsmodul (220) und dem Configuration Management DataBase-Modul (210) unter Verwendung der Kommunikationsvorrichtung (230);
• Ende der Erkennung:
∘ Ausschalten des Servers (11);
∘ Dekonfigurieren der Netzwerkschnittstellen aus dem Erkennungsmodus für das virtuelle lokale Netzwerk, VLAN, unter Verwendung der Netzwerk-Virtualisierungs- und Orchestrierungskomponente (290) und Versetzen in einen Isolationsmodus (Quarantäne).

11. Verfahren (100) nach einem der Ansprüche 7 bis 10, wobei ein Löschen eines Servers (11) aus dem Bereitstellungsmodul (220) zu einem Löschen des entsprechenden Eintrags in der Datenbank und einem Zurücksetzen des Erkennungsprozesses führt.

12. Verarbeitungssystem (200) zum Verwalten einer Datenverarbeitungsinfrakonstruktion (10), wobei das Verarbeitungssystem (200) einen Prozessor (300) umfasst, der bei der Ausführung von computerlesbaren Anweisungen das Verfahren nach einem der Ansprüche 1 bis 11 durchführt.

13. Computerlesbares Speichermedium, das Anweisungen speichert, die, wenn sie von einem Verarbeitungssystem ausgeführt werden, das Verarbeitungssystem veranlassen, das Verfahren nach einem der Ansprüche 1 bis 11 durchzuführen.

## Revendications

1. Procédé mis en œuvre par ordinateur (100) pour gérer une infrastructure informatique (10), l'infrastructure informatique (10) ayant un ensemble de composants comprenant au moins un serveur non provisionné (11) et au moins un commutateur (12), chaque composant étant dans un état réel susceptible d'évoluer au fil du temps, le procédé (100) comprenant les éléments suivants :
l'accès (110) à un support lisible par ordinateur comprenant des instructions qui, lorsqu'elles sont exécutées par un processeur (300), amènent le processeur (300) à exécuter des composants logiciels comprenant :
∘ un module de gestion de serveur (270) configuré pour envoyer des données relatives aux états réels des composants de l'infrastructure informatique (10) ;
∘ un module de communication (230) configuré pour recevoir les données envoyées par le module de gestion de serveur (270) ; et
au moins un des éléments suivants :
▪ un module de base de données de gestion de configuration, CMDB, (210) et un module de virtualisation et d'orchestration de réseau (290), le module CMDB (210) et/ou le module de virtualisation et d'orchestration de réseau (290) sont configurés pour stocker les données reçues par le module de communication, désignées données enregistrées, dans une base de données,
dans lequel,
le module de communication (230) reçoit les données relatives aux états réels des composants envoyées par le module de gestion de serveur (270) à une fréquence en temps réel et, en fonction des données reçues, met à jour les données enregistrées stockées, l'étape de mise à jour étant désignée mise à jour nominale ;
le module de communication (230) exécute une opération de sécurité à une fréquence de sécurité, l'opération de sécurité comprenant :
∘ la comparaison de chaque état réel de chaque composant de l'infrastructure informatique (10) à chaque état enregistré de chaque composant enregistré dans la base de données ; et
∘ lorsque l'état enregistré correspondant diffère de l'état réel, la mise à jour de la base de données en remplaçant l'état enregistré par l'état réel, appelée remplacement de données, l'étape de mise à jour étant appelée mise à jour de sécurité ;
∘ dans lequel la fréquence en temps réel est inférieure à la fréquence de sécurité.

2. Procédé selon la revendication 1, dans lequel la mise à jour nominale et la mise à jour de sécurité sont traitées par un module de traitement du module de communication (230), dans lequel une même structure d'entrée est appliquée aux données reçues et aux données de remplacement, et une même structure de traitement est appliquée à l'entrée.

3. Procédé selon la revendication 1 ou 2, dans lequel la fréquence de sécurité est soit prédéterminée, soit adaptable à l'infrastructure informatique (10).

4. Procédé selon la revendication 3, dans lequel la fréquence de sécurité est déterminée dans une boucle de rétroaction en fonction d'un temps d'exécution de l'opération de sécurité.

5. Procédé selon les revendications 3 ou 4, dans lequel la fréquence en temps réel est inférieure à 5 s et la fréquence de sécurité est comprise entre 6 s et 16 min.

6. Procédé selon l'une quelconque des revendications 1 à 5, dans lequel l'ensemble de composants comprend en outre un serveur et une interface réseau, dans lequel l'état réel des composants représente un état du serveur ou un état de l'interface réseau.

7. Procédé selon l'une quelconque des revendications 1 à 5, dans lequel le module de communication (230) a pour fonction : (a) de permettre la communication entre le module de base de données de gestion de configuration (210) et un module de déploiement (220) configuré pour déployer l'infrastructure informatique (10) ; et (b) de gérer au moins un module d'interface DHCP (Dynamic Host Configuration Protocol), dans lequel les composants logiciels comprennent en outre :
∘ un module de configuration (240) configuré pour initialiser le module de base de données de gestion de configuration (210) avec des informations relatives à l'au moins un commutateur (12) et à sa configuration ;
∘ un module de passerelle des opérations réseau, NOG, (250) configuré pour gérer et commander l'au moins un commutateur (12) en recevant des données de configuration provenant du module CMDB (210) et en appliquant les configurations reçues à l'au moins un commutateur (12) ; et
∘ un module de système de noms de domaine, DNS, (260) configuré pour gérer les services de système de noms de domaine dans l'infrastructure informatique (10) ;
le procédé comprenant en outre :
• le calcul (120) de données pour l'initialisation du module de base de données de gestion de configuration (210), les données calculées comprenant au moins une adresse de protocole Internet, IP, de l'au moins un commutateur (12) ;
• l'initialisation (130), par le module de configuration (240), d'au moins une partie des composants logiciels, par :
∘ l'initialisation du module de base de données de gestion de configuration (210) à l'aide des données calculées ; et
∘ la configuration du module de système de noms de domaine (260) avec des configurations provenant du module CMDB (210) ;
• la détermination (140), à l'aide du module de base de données de gestion de configuration (210), de configurations pour :
∘ le module de communication (230) sur au moins une interface de gestion de plateforme intelligente, IPMI, et sur au moins un réseau de gestion ; et
∘ l'au moins un commutateur (12) étant configuré pour permettre son provisionnement sur la base des données calculées provenant du module de base de données de gestion de configuration (210) ;
• le provisionnement (150) d'au moins une pile réseau avec des données de provisionnement provenant du module de base de données de gestion de configuration (210), les données de provisionnement comprenant des données relatives à des dispositifs réseau, des interfaces, des réseaux et les configurations déterminées par le module CMDB (210), le provisionnement (150) comprenant :
∘ le provisionnement du module DNS (260) ;
∘ le provisionnement du module de passerelle des opérations réseau (250) ;
• la déclaration (160) d'au moins un réseau dans le module de déploiement (220) ;
• la synchronisation (170) du module de déploiement (220) avec le module de base de données de gestion de configuration (210), dans lequel, en réponse à la synchronisation, le module de déploiement (220) démarre un processus de découverte de serveur à l'aide du module de communication (230) ; et
• le démarrage (180) de l'au moins un serveur non provisionné (11) à découvrir par le module de déploiement (220).

8. Procédé (100) selon la revendication 7, dans lequel le module de déploiement (220) est en outre configuré pour :
• détecter au moins un nouveau serveur (11) à l'aide du module de communication (230) ;
• envoyer le numéro de port et le numéro de commutateur (12) du nouveau serveur (11) au module de base de données de gestion de la configuration (210) à l'aide du module de communication (230) ; et
• supprimer un mode de découverte du nouveau serveur (11) à l'aide du module de communication (230).

9. Procédé (100) selon l'une quelconque des revendications 1 à 8, dans lequel l'état réel des composants est la détection de l'au moins un nouveau serveur et/ou du numéro de port et/ou du numéro de commutateur du nouveau serveur (11).

10. Procédé (100) selon l'une quelconque des revendications 7 à 9, dans lequel le module de virtualisation et d'orchestration de réseau (290) est configuré pour créer et gérer des réseaux virtuels, des sous-réseaux, des routeurs, des pare-feu, des équilibreurs de charge et d'autres composants de réseau connexes au sein du module de déploiement (220) ; et
dans lequel le processus de découverte de serveur comprend en outre les étapes suivantes :
• Initialisation :
∘ la mise hors tension d'un serveur (11), dans lequel le serveur (11) est inconnu du module de déploiement (220) et du module de base de données de gestion de configuration (210) ;
∘ la configuration d'interfaces réseau dans un mode réseau local virtuel, VLAN, de découverte par le composant de virtualisation et d'orchestration de réseau (290) ;
• Découverte :
∘ la mise sous tension du serveur (11) ;
∘ le démarrage du serveur (11) à travers le réseau ;
∘ le chargement, par le serveur (11), d'au moins un agent configuré pour l'analyser et l'au moins un commutateur (12), et la génération d'un rapport comprenant des résultats de l'analyse, et l'envoi du rapport au module de déploiement (220) ;
∘ la réalisation d'une synchronisation entre le module de déploiement (220) et le module de base de données de gestion de configuration (210) à l'aide du dispositif de communication (230) ;
• Fin de la découverte :
∘ la mise hors tension du serveur (11) ;
∘ l'annulation de la configuration des interfaces réseau du mode réseau local virtuel de découverte, VLAN, à l'aide du composant de virtualisation et d'orchestration réseau (290) et les placer dans un mode d'isolation (quarantaine).

11. Procédé (100) selon l'une quelconque des revendications 7 à 10, dans lequel une suppression d'un serveur (11) du module de déploiement (220) entraîne la suppression de l'entrée correspondante dans la base de données et la réinitialisation du processus de découverte.

12. Système de traitement (200) pour gérer une infrastructure informatique (10), le système de traitement (200) comprenant un processeur (300) qui, lors de l'exécution d'instructions lisibles par ordinateur, exécute le procédé selon l'une quelconque des revendications 1 à 11.

13. Support de stockage lisible par ordinateur stockant des instructions qui, lorsqu'elles sont exécutées par un système de traitement, amènent le système de traitement à réaliser le procédé selon l'une quelconque des revendications 1 à 11.
